(19) Europäisches Patentamt
European Patent Office
Office européen des brevets

(11) **EP 2 872 797 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
***F16F 15/14*** *(2006.01)*     ***F16H 45/02*** *(2006.01)*

(21) Anmeldenummer: **13731112.2**

(22) Anmeldetag: **20.06.2013**

(86) Internationale Anmeldenummer:
**PCT/EP2013/062838**

(87) Internationale Veröffentlichungsnummer:
**WO 2014/009125 (16.01.2014 Gazette 2014/03)**

(54) **TORSIONSSCHWINGUNGSDÄMPFER**

TORSIONAL VIBRATION DAMPER

AMORTISSEUR DE VIBRATIONS TORSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2012 DE 102012212125**

(43) Veröffentlichungstag der Anmeldung:
**20.05.2015 Patentblatt 2015/21**

(73) Patentinhaber: **ZF Friedrichshafen AG 88046 Friedrichshafen (DE)**

(72) Erfinder:
- **ECKHARDT, Daniel 97469 Gochsheim (DE)**
- **REDIGER, Patrick 15831 Mahlow (DE)**
- **WACK, Erwin 97464 Niederwerrn (DE)**
- **SASSE, Christoph 97422 Schweinfurt (DE)**

(56) Entgegenhaltungen:
DE-A1-102011 011 469

EP 2 872 797 B1

**Beschreibung**

Die Erfindung betrifft einen Torsionsschwingungsdämpfer für eine zur Herstellung einer Wirkverbindung zwischen einem Antrieb und einem Abtrieb dienende Kopplungsvorrichtung. Die Kopplungsvorrichtung verfügt über ein Kupplungssystem mit einem Kupplungselement, das zwischen einer Einrückposition, in welcher eine Wirkverbindung zwischen dem Antrieb und dem Abtrieb herstellbar ist, und einer Ausrückposition, in welcher diese Wirkverbindung aufgehoben ist, verlagerbar ist, sowie über zumindest zwei mit Radialversatz zueinander angeordnete Dämpfungseinrichtungen, denen zumindest ein zwischen den beiden Dämpfungseinrichtungen wirksames Tilgersystem und zumindest eine von dem Tilgersystem unabhängige Zusatzmasse zugeordnet sind. Das Kupplungselement steht mit einem Eingang einer der Dämpfungseinrichtungen in Wirkverbindung, und ein Ausgang einer anderen der Dämpfungseinrichtungen steht mit dem Abtrieb in Wirkverbindung. Darüber hinaus steht der Ausgang einer der Dämpfungseinrichtungen mit einem Eingang einer anderen der Dämpfungseinrichtungen mittels einer Verbindungsvorrichtung in Wirkverbindung. Die Verbindungsvorrichtung weist wenigstens einen Tilgermassenträger zur Aufnahme zumindest einer Tilgermasse des Tilgersystems auf.

Ein solcher Torsionsschwingungsdämpfer ist aus der WO 2011/110146 A1 bekannt. Bei diesem Torsionsschwingungsdämpfer kann der Antrieb als Brennkraftmaschine ausgebildet sein, während die Kopplungsvorrichtung durch einen hydrodynamischen Drehmomentwandler gebildet ist, der über einen hydrodynamischen Kreis und ein Kupplungssystem verfügt, wobei der hydrodynamische Kreis aus Pumpenrad, Turbinenrad und Leitrad besteht, und das Kupplungssystem ein Kupplungselement aufweist, das zwischen einer Einrückposition und einer Ausrückposition verlagerbar ist, und die Möglichkeit bietet, in der Einrückposition den hydrodynamischen Kreis zu überbrücken. In der Einrückposition ist eine Wirkverbindung zwischen dem Antrieb und dem Abtrieb herstellbar, während in der Ausrückposition diese Wirkverbindung aufgehoben ist. Die der Kopplungsvorrichtung ebenfalls zugeordneten beiden Dämpfungseinrichtungen sind, ohne wesentlichen Axialversatz, aber mit Radialversatz zueinander und auch gegenüber einem Tilgersystem angeordnet, wobei sich dieses Tilgersystem radial zwischen den beiden Dämpfungseinrichtungen befindet. Der Eingang der radial äußeren Dämpfungseinrichtung ist mit dem Kupplungselement drehverbunden, während der Ausgang dieser Dämpfungseinrichtung mittels der Verbindungsvorrichtung mit dem Eingang der radial inneren Dämpfungseinrichtung verbunden ist. Die Verbindungsvorrichtung umfasst zwei mit Axialversatz zueinander angeordnete Scheibenelemente, von denen eines Energiespeicher der radial äußeren Dämpfungseinrichtung zumindest über einen Teil von deren Umfang umschließt, und somit eine Fliehkraftabstützung für diese Energiespeicher bildet. Die beiden Scheibenelemente der Verbindungsvorrichtung sind einerseits mit dem Turbinenrad drehfest verbunden, das als Zusatzmasse wirksam ist, und sind andererseits als Tilgermassenträger wirksam, indem sie auf Stufenzapfen, die zur axialen Verbindung der Scheibenelemente dienen, Tilgermassen des Tilgersystems aufnehmen. Aufgrund der Aufnahme an der Verbindungsvorrichtung ist das Tilgersystem zwischen den beiden Dämpfungseinrichtungen wirksam. Der Ausgang der radial inneren Dämpfungseinrichtung schließlich wird durch eine Nabenscheibe gebildet, die, ebenso wie die Tilgermassenträger in diesem Radialbereich, Ausnehmungen zur Aufnahme von Energiespeichern der radial inneren Dämpfungseinrichtung aufweist, und die über eine Nabe mit einem Abtrieb, wie einer Getriebeeingangswelle, drehfest verbunden sein kann.

Bei dem bekannten Torsionsschwingungsdämpfer wird ein vom Kupplungselement stammendes Drehmoment radial außerhalb des Tilgersystems auf die radial äußere Dämpfungseinrichtung übertragen. Dadurch ist der für die Funktion der Tilgermassen überaus wichtige Bauraum belegt, so dass die Tilgermassen radial weiter innen angeordnet sein müssen. Sofern dieser prinzipielle Nachteil überhaupt ausgeglichen werden kann, erfolgt dies über größere Tilgermassen, wofür der Bauraum verfügbar sein muss, und wodurch das Gesamtgewicht der Koppelvorrichtung ansteigt.

Aufgrund des erheblichen Energiespeichervolumens bei der radial äußeren Dämpfungseinrichtung besteht insbesondere bei Auslegung derselben mit geringer Steifigkeit das Risiko, dass einzelne Windungen von Energiespeichern fliehkraftbedingt eine erhebliche Auslenkung in Radialrichtung erfahren, und damit gegenüber anderen Windungen ausknicken. Um dieses Problem zu begrenzen, kann der radial äußeren Dämpfungseinrichtung, wie beim bekannten Torsionsschwingungsdämpfer realisiert, eine Fliehkraftabstützung zugeordnet sein. Nachteil einer solchen Fliehkraftabstützung ist allerdings, dass die Windungen der Energiespeicher gegenüber der Fliehkraftabstützung bei Auslenkbewegungen zwischen dem Eingang und dem Ausgang der Dämpfungseinrichtung reibungsbelastet sind, wodurch die Entkopplungsgüte sinkt. Eine unzureichende Entkopplungsgüte bei einer im Momentenfluss vor einem Tilgersystem angeordneten Dämpfungseinrichtung wirkt sich nachteilig auf die Funktionalität des Tilgersystems aus, da unzureichend gedämpfte Torsionsschwingungen eine Auslenkbewegung der Tilgermassen aus der fliehkraftgestützten Mittellage auslösen. Eine solche Auslenkbewegung wirkt sich besonders nachteilig aus, wenn die Tilgermassen so stark ausgelenkt werden, dass sie gegen Drehwinkelbegrenzungen schlagen.

Bei Antriebssträngen mit biegesteifem, als Getriebeeingangswelle ausgebildetem Abtrieb wurde die Erkenntnis gewonnen, dass die Wirkung einer Zusatzmasse begrenzt ist, wenn sie, wie bei dem bekannten Torsionsschwingungsdämpfer realisiert, wirkungsmäßig zwischen den beiden Dämpfungseinrichtungen an der Verbindungsvorrichtung angebunden und demnach nicht zu einer Relativdrehauslenkung gegenüber dieser Verbindungsvorrichtung befähigt ist.

Ein weiterer Torsionsschwingungsdämpfer ist aus der WO 2011/076168 A1 bekannt. Gemäß Fig. 5, die eine Konkretisierung des in Fig. 2d gezeigten Prinzips angibt, ist auch bei dieser druckschriftlichen Veröffentlichung die Kopplungsvorrichtung durch einen hydrodynamischen Drehmomentwandler gebildet, der zusätzlich zu dem hydrodynamischen Kreis über ein Kupplungssystem verfügt, dessen zwischen einer Einrückposition und einer Ausrückposition verlagerbares Kupplungselement die Möglichkeit bietet, in der Einrückposition den hydrodynamischen Kreis zu überbrücken. Die beiden Dämpfungseinrichtungen des Torsionsschwingungsdämpfers sind ohne wesentlichen Axialversatz, aber mit Radialversatz zueinander angeordnet, wobei das Kupplungselement mit dem Eingang der radial inneren Dämpfungseinrichtung drehverbunden ist, während der Ausgang dieser Dämpfungseinrichtung mittels der Verbindungsvorrichtung nicht nur mit dem Eingang der radial äußeren Dämpfungseinrichtung verbunden ist, sondern darüber hinaus auch mit dem Eingang eines zusätzlichen Federsystems, dessen Ausgang auf das als Tilgersystem dienende Turbinenrad des hydrodynamischen Kreises einwirkt. Obwohl dieses Federsystem radial innerhalb der beiden Dämpfungseinrichtungen sitzt, ist das Tilgersystem aufgrund der Aufnahme an der Verbindungsvorrichtung zwischen den beiden Dämpfungseinrichtungen wirksam. Der Ausgang der radial äußeren Dämpfungseinrichtung schließlich wird durch eine Deckplatte gebildet, die über eine Nabe mit einem Abtrieb, wie einer Getriebeeingangswelle, drehfest verbunden sein kann.

Bei diesem Torsionsschwingungsdämpfer wird ein vom Kupplungselement stammendes Drehmoment zwar auf die radial innere Dämpfungseinrichtung geleitet, jedoch steht kein Tilgersystem in üblicher Ausgestaltung, also mit vom Turbinenrad unabhängigen Tilgermassen, zur Verfügung. Da statt dessen das Turbinenrad als Tilgermasse Verwendung findet, ist das Turbinenrad trotz Aufnahme an der Verbindungsvorrichtung relativ zu derselben auslenkbar. Damit liegt auch keine Zusatzmasse in üblicher Ausgestaltung vor, welche einem Bauteil des Torsionsschwingungsdämpfers ohne die Möglichkeit einer Relativbewegung zugeordnet ist.

Der Erfindung liegt die Aufgabe zugrunde, einen über ein Tilgersystem sowie über eine Zusatzmasse verfügenden Torsionsschwingungsdämpfer so auszubilden, dass Tilgersystem und Zusatzmasse derart mit Bauteilen des Torsionsschwingungsdämpfers gekoppelt sind, dass sich die jeweils bestmögliche Tilgungs- und Dämpfungswirkung einstellt.

Gemäß der vorliegenden Erfindung wird diese Aufgabe gelöst durch einen Torsionsschwingungsdämpfer für eine zur Herstellung einer Wirkverbindung zwischen einem Antrieb und einem Abtrieb dienende Kopplungsvorrichtung. Die Kopplungsvorrichtung verfügt über ein Kupplungssystem mit einem Kupplungselement, das zwischen einer Einrückposition, in welcher eine Wirkverbindung zwischen dem Antrieb und dem Abtrieb herstellbar ist, und einer Ausrückposition, in welcher diese Wirkverbindung aufgehoben ist, verlagerbar ist, sowie über zumindest zwei mit Radialversatz zueinander angeordnete Dämpfungseinrichtungen, denen zumindest ein zwischen den beiden Dämpfungseinrichtungen wirksames Tilgersystem und zumindest eine von dem Tilgersystem unabhängige Zusatzmasse zugeordnet sind. Das Kupplungselement steht mit einem Eingang einer der Dämpfungseinrichtungen in Wirkverbindung, und ein Ausgang einer anderen der Dämpfungseinrichtungen steht mit dem Abtrieb in Wirkverbindung. Darüber hinaus steht der Ausgang einer der Dämpfungseinrichtungen mit einem Eingang einer anderen der Dämpfungseinrichtungen mittels einer Verbindungsvorrichtung in Wirkverbindung. Die Verbindungsvorrichtung weist wenigstens einen Tilgermassenträger zur Aufnahme zumindest einer Tilgermasse des Tilgersystems auf.

Erfindungsgemäß ist dann weiter vorgesehen, dass das Kupplungselement mit dem Eingang der radial inneren Dämpfungseinrichtung und der Ausgang der radial äußeren Dämpfungseinrichtung über die Zusatzmasse mit dem Abtrieb in Wirkverbindung steht, während der Ausgang der radial inneren Dämpfungseinrichtung über die Verbindungsvorrichtung mit dem Eingang der radial äußeren Dämpfungseinrichtung wirkverbunden ist, so dass die Zusatzmasse und die Verbindungsvorrichtung relativ zueinander bewegbar vorgesehen sind.

Die Maßnahme, das Kupplungselement mit dem Eingang der radial inneren Dämpfungseinrichtung zu verbinden, bringt besondere Vorteile bei der Verwendung eines Tilgersystems, was wie folgt erläutert werden soll.

Ein Tilgersystem erfährt nur dann eine geringe Auslenkbewegung der Tilgermassen aus der fliehkraftgestützten Mittellage, wenn mit einem Drehmoment eingeleitete Torsionsschwingungen vor Übertragung auf die Tilgermassen zumindest weitgehend abgebaut sind. Nur dann kann nämlich wirksam vermieden werden, dass die Tilgermassen aufgrund unzureichend gedämpfter Torsionsschwingungen eine Auslenkbewegung aus der fliehkraftgestützten Mittellage erfahren, und schlimmstenfalls hierbei gegen Drehwinkelbegrenzungen schlagen. Insofern kommt der Anordnung einer Dämpfungseinrichtung, die eine besonders hohe Entkopplungsgüte erbringt, im Momentenfluss vor dem Tilgersystem eine besondere Bedeutung zu. Eine solche Dämpfungseinrichtung ergibt sich, wenn diese mit geringer Steifigkeit und zudem reibungsarm ausgelegt ist.

Ein bevorzugter Weg, um eine geringe Steifigkeit zu erzielen, ist die Ausbildung von Energiespeichern einer Dämpfungseinrichtung mit großem Außendurchmesser. Dies erklärt sich aus der nachfolgend angegebenen Gleichung:

$$C = dF/ds = (G \times d^{4)}) / (8 \times D^3 \times n)$$

mit

| | |
|---|---|
| C = | Steifigkeit des Energiespeichers |
| dF = | Änderung der eingeleiteten Kraft |
| ds = | Wegänderung |
| G = | Schubmodul |
| d = | Windungsquerschnitt Energiespeicher |
| D = | Außendurchmesser der Windungen am Energiespeicher |
| n = | Anzahl der Windungen des Energiespeichers |

Da sich der Außendurchmesser der Windungen am Energiespeicher im Nenner der Gleichung befindet, wird eine Zunahme dieses Außendurchmessers zu einer Reduzierung der Steifigkeit C des Energiespeichers führen.

Da bei Anordnung der Tilgermassen eines Tilgersystems im radial äußeren Bereich des hydrodynamischen Kreises kein hinreichender Bauraum verbleibt, um für die radial äußere Dämpfungseinrichtung Energiespeicher mit besonders großem Außendurchmesser zu verwenden, empfiehlt sich die Verwendung derartiger Energiespeicher bei der radial inneren Dämpfungseinrichtung. Für diese steht üblicherweise insbesondere im Radialbereich radial innerhalb des Turbinenrades erheblicher axialer Bauraum gegenüber einem Deckel eines Gehäuses der Kopplungsvorrichtung zur Verfügung. Dadurch kann die radial innere Dämpfungseinrichtung mit sehr geringer Steifigkeit ausgebildet werden. Hinzu kommt, dass die Energiespeicher der radial inneren Dämpfungseinrichtung üblicherweise über ein geringeres Energiespeichervolumen verfügen als die Energiespeicher der radial äußeren Dämpfungseinrichtung, und daher nicht zwingend in einem Energiespeicherkanal geführt werden müssen, um diese gegen die wirksame Fliehkraft abzustützen. Die Energiespeicher der radial inneren Dämpfungseinrichtung können daher reibungsärmer geführt werden als die Energiespeicher der radial äußeren Dämpfungseinrichtung. All dies begünstigt die radial innere Dämpfungseinrichtung als diejenige Dämpfungseinrichtung, welche im Momentenfluss vor den Tilgermassen vorgesehen ist.

Um einen komplizierten Übertragungsweg zwischen dem Kupplungselement des Kupplungssystems und der radial inneren Dämpfungseinrichtung zu vermeiden, ist das Kupplungselement mit dem Eingang der radial inneren Dämpfungseinrichtung verbunden. Zwangsläufig besteht dann eine Kopplung zwischen dem Ausgang der radial inneren Dämpfungseinrichtung und dem Eingang der radial äußeren Dämpfungseinrichtung, und zwar mit Vorzug mittels einer Verbindungsvorrichtung.

Für eine weitergehende Unterstützung der Wirkung des Tilgersystems ist dem Torsionsschwingungsdämpfer eine Zusatzmasse zugeordnet, die bei Ausbildung der Koppelvorrichtung mit einem hydrodynamischen Kreis durch ein Turbinenrad gebildet sein kann. Bei neu entwickelten Getrieben besteht aufgrund der Kombination mit Antrieben, die immer höhere Drehmomente bereitstellen können, die Tendenz, den Abtrieb, also die Getriebeeingangswelle, immer verdrehsteifer auszubilden. Angesichts derartiger Abtriebe hat sich erwiesen, dass die Wirkung der Zusatzmasse im Hinblick auf die Entkopplung von Torsionsschwingungen besonders vorteilhaft ist, wenn die Zusatzmasse am Ausgang der radial äußeren Dämpfungseinrichtung vorgesehen ist. Die Zusatzmasse ist dann relativ bewegbar gegenüber der zwischen den beiden Dämpfungseinrichtungen wirksamen Verbindungsvorrichtung.

Da der Ausgang der radial äußeren Dämpfungseinrichtung über die Zusatzmasse mit dem Abtrieb in Wirkverbindung steht, wird der Momentenfluss, ausgehend vom Ausgang der radial äußeren Dämpfungseinrichtung, auf kürzest möglichem Weg und unter Vermeidung sonstiger der Momentenübertragung dienender Bauteile auf den Abtrieb geleitet. Diese Maßnahme begünstigt eine axial kompakte Bauweise sowie geringen Bauteileaufwand und geringes Gewicht.

Die radial äußere Dämpfungseinrichtung verfügt aufgrund ihrer Anordnung auf einem radial großen Durchmesser über ein erhebliches Energiespeichervolumen, das entweder durch wenige Energiespeicher großer Umfangserstreckung aufgebracht wird, oder aber durch eine Mehrzahl von Energiespeichern geringerer Umfangserstreckung. Unabhängig von der jeweils gewählten Ausbildung der Energiespeicher ist eine Fliehkraftabstützung für die Energiespeicher von erheblichem Vorteil, um unerwünschte fliehkraftbedingte Durchbiegungen der Energiespeicher nach radial außen zumindest zu begrenzen. In vorteilhafter Weise ist die Fliehkraftabstützung mit einem Energiespeicherkanal versehen, der insbesondere dann, wenn er in Umfangsrichtung durchgängig ist, als Führungsbahn für die Energiespeicher wirkt, die somit gleitend an der Fliehkraftabstützung aufgenommen sind. Außerdem ist ein solcher Energiespeicherkanal bei Einleitung der Fliehkraft sehr formstabil.

Bei der Fliehkraftabstützung der radial äußeren Dämpfungseinrichtung ist der Energiespeicherkanal mit Vorzug entweder an der zwischen den beiden Dämpfungseinrichtungen wirksamen Verbindungsvorrichtung vorgesehen und damit am Eingang der radial äußeren Dämpfungseinrichtung, oder aber an der Zusatzmasse und damit am Ausgang der radial äußeren Dämpfungseinrichtung. Im erstgenannten Fall verfügt die Verbindungsvorrichtung über zumindest ein Übertragungselement, das zur Bildung des Energiespeicherkanals mit zumindest einer Umformung versehen ist, während im letztgenannten Fall der Ausgang der radial äußeren Dämpfungseinrichtung zur Ausbildung des Energiespeicherkanals mit zumindest einer Umformung versehen ist.

Auch für die radial innere Dämpfungseinrichtung ist eine Fliehkraftabstützung von Vorteil. Aufgrund der Anordnung auf einem gegenüber der radial äußeren Dämpfungseinrichtung geringeren Radius ist das Energiespeichervolumen allerdings erheblich geringer als bei der radial äußeren Dämpfungseinrichtung. Alternativ zu einem Energiespeicherkanal kann daher vorgesehen sein, zumindest den Eingang der radial inneren Dämpfungseinrichtung, gegebenenfalls aber auch deren als Übertragungselement der Verbindungsvorrichtung wirksamen Ausgang als Energiespeicherträger auszubilden, der Ausnehmungen für die Energiespeicher aufweist, sowie zumindest eine wenigstens einem der Energiespeicher zugeordnete Fliehkraftabstützung. Mit Vorzug ist der über eine Fliehkraftabstützung verfügende Energiespeicherträger mit einer diese Fliehkraftabstützung bildenden Umformung versehen, mit welcher der Energiespeicherträger die Energiespeicher zumindest im Wesentlichen nach radial außen abstützt.

Vorteilhafterweise ist das zumindest eine Übertragungselement der Verbindungsvorrichtung als Tilgermassenträger ausgebildet. Damit kann sowohl der bevorzugt an der radial äußeren Dämpfungseinrichtung vorgesehene Energiespeicherkanal als auch zumindest einer der bevorzugt an der radial inneren Dämpfungseinrichtung vorgesehenen Energiespeicherträger an dem Tilgermassenträger vorgesehen sein. Bei Ausbildung der Verbindungsvorrichtung mit einem einzelnen Tilgermassenträger sind die Tilgermassen beidseits des Tilgermassenträgers aufgenommen, während bei Ausbildung der Verbindungsvorrichtung mit einer Mehrzahl an Tilgermassenträgern die Tilgermassen in einem zwischen zwei Tilgermassenträgern vorgesehenen Axialbereich aufgenommen sind. Der jeweilige Tilgermassenträger verfügt hierbei über Bahnkurven, in welchen Stufenrollen für die Relativbewegung der Tilgermassen gegenüber dem wenigstens einen Tilgermassenträger und gegebenenfalls Stufenzapfen zur Axialpositionierung der einzelnen Tilgermassen relativ zueinander sowie relativ zu dem Tilgermassenträger vorgesehen sind.

Bei Ausbildung der Verbindungsvorrichtung mit einer Mehrzahl an Tilgermassenträgern sind diese Tilgermassenträger vorteilhafterweise jeweils mit Axialabstand zueinander angeordnet und durch Abstandsstücke in einem vorbestimmten Axialabstand zueinander gehalten. Hierzu sind die Abstandsstücke in Achsrichtung gestuft, wobei sie in denjenigen Axialbereichen, in welchen sie Aussparungen des jeweiligen Tilgermassenträgers durchgreifen, mit einem Durchmesser ausgebildet sind, der sich von den Durchmessern der Abstandsstücke axial beidseits der jeweiligen Aussparungen unterscheiden.

Die Abstandsstücke können in Verbindung mit den Aussparungen eine weitere Funktion ermöglichen, wie nachfolgend gezeigt werden soll:

Mit Vorzug ist zwischen Eingang und Ausgang zumindest einer der Dämpfungseinrichtungen eine Drehwinkelbegrenzung vorgesehen ist, bei welcher am Eingang oder an einem mit demselben drehfesten Bauteil eine Profilierung vorgesehen ist, die mit einer am Ausgang oder an einem mit demselben drehfesten Bauteil vorgesehenen Gegen-Profilierung mit Spiel in Umfangsrichtung zusammen wirkt, um dem Ausgang eine begrenzte Relativdrehbewegung in Umfangsrichtung gegenüber dem Eingang zu gewähren.

Wenn insbesondere bei der radial inneren Dämpfungseinrichtung die Abstandsstücke der Tilgermassenträger am Eingang dieser Dämpfungseinrichtung oder an einem mit dem Eingang drehfesten Bauteil, wie beispielsweise dem Kupplungselement des Kupplungssystems, befestigt sind, und wenn die Aussparungen in den Tilgermassenträgern als Kurvenbahnen mit Erstreckung in Umfangsrichtung ausgebildet sind, dann wirken die Abstandsstücke in Verbindung mit den Aussparungen als Drehwinkelbegrenzung, wenn die Kurvenbahnen in Umfangsrichtung in Relation zum Verformungsweg der Energiespeicher derart dimensioniert sind, dass die Abstandsstücke die in Auslenkrichtung folgenden umfangsseitigen Enden der Kurvenbahnen erreicht haben, bevor die Energiespeicher der radial inneren Dämpfungseinrichtung ihren maximalen Stauchungszustand einnehmen.

Sind die Kurvenbahnen dagegen in Umfangsrichtung in Relation zum Verformungsweg der Energiespeicher derart dimensioniert, dass die Abstandsstücke die in Auslenkrichtung folgenden umfangsseitigen Enden der Kurvenbahnen nicht erreichen, auch wenn die Energiespeicher der radial inneren Dämpfungseinrichtung bereits ihren maximalen Stauchungszustand einnehmen, dann kommt den Abstandsstücken dagegen lediglich eine Führungsfunktion für die Tilgermassenträger zu.

Bei der radial äußeren Dämpfungseinrichtung ist es dagegen zur Bildung einer Drehwinkelbegrenzung von Vorteil, eine Verzahnung am Eingang oder an einem mit dem Eingang drehfesten Bauteil vorzusehen, und eine entsprechende Gegen-Verzahnung am Ausgang oder an einem mit demselben drehfesten Bauteil zu realisieren.

Bei zumindest einer der beiden Dämpfungseinrichtungen sind die Energiespeicher auf das maximale Lastmoment des Antriebs ausgelegt. Dadurch ist sichergestellt, dass erst dann die jeweilige Drehwinkelbegrenzung erreicht wird, wenn das maximale Lastmoment des Antriebs überschritten wird. Da dies nur bei Extremsituationen der Fall sein wird, ist sichergestellt, dass bei normalen Betriebszuständen die Drehwinkelbegrenzung nicht wirksam wird. Dies ist wichtig, da die Aktivierung der Drehwinkelbegrenzung die Einleitung eines Stoßes in die Tilgermassen des Tilgersystems zu Folge hätte.

In vorteilhafter Weise ist der erfindungsgemäße Torsionsschwingungsdämpfer in einem der Kopplungsvorrichtung zugeordneten, antriebsseitig über einen Gehäusedeckel verfügenden Gehäuse axial positioniert. Bei Ausbildung der Kopplungsvorrichtung mit einem hydrodynamischen Kreis, der nicht nur über ein Pumpenrad und ein Turbinenrad, sondern darüber hinaus über ein axial zwischen Pumpenrad und Turbinenrad angeordnetes Leitrad verfügt, ist die Zusatzmasse in Form des Turbinenrades in vom Gehäusedeckel fortweisender Richtung an dem Leitrad oder an einem Bauteil desselben axial abstützbar. An der gegenüber liegenden Seite des Torsionsschwingungsdämpfers, also an dessen dem Gehäusedeckel zugewandter Seite, ist dagegen das Kupplungselement über eine Axiallagerung an einem Bauteil des Torsionsschwingungsdämpfers axial abstützbar.

Besonders vorteilhaft für das Kupplungssystem ist, wenn dessen Kupplungselement ein Trägerelement zugeordnet ist, das an seiner dem Gehäusedeckel zugewandten Seite eine Reibfläche trägt, und in Einrückposition des Kupplungselementes über diese Reibfläche mit einer Gegenreibfläche des Gehäusedeckels in Wirkverbindung bringbar ist. An diesem Trägerelement ist zumindest ein die Reibfläche aufweisender Reibbelag aufgenommen. Dies erbringt den Vorteil, dass zum Aufbringen des Reibbelages lediglich das Trägerelement erwärmt werden muss, und nicht das vergleichsweise massereiche Kupplungselement. Auf diese Weise wird beim Fertigungsvorgang eine erhebliche Einsparung an thermischer Energie beim Aufbringen des Reibbelages erzielt. Die Anbindung des Trägerelementes am Kolbenelement erfolgt dagegen energiearm beispielsweise mittels Vernietung.

Die Dämpfungseinrichtungen des Torsionsschwingungsdämpfers können in vorteilhafter Weise weitergebildet werden. Da insbesondere die im Momentenfluss vor dem Tilgersystem liegende radial innere Dämpfungseinrichtung eine hohe Entkopplungsgüte bereitstellen soll, befassen sich solche Weiterbildungen mit Vorzug mit dieser Dämpfungseinrichtung.

Üblicherweise sind bei einer Dämpfungseinrichtung zumindest zwei Energiespeicher radial ineinander angeordnet, es liegt also eine Außenenergiespeicher und ein Innenenergiespeicher vor. Sofern keine speziellen konstruktiven Maßnahmen getroffen sind, werden Außen- und Innenenergiespeicher parallel zueinander angesteuert. Sollte bei einer derartigen Konstruktion die Steifigkeit der Dämpfungseinrichtung zu hoch und daher die Entkopplungsgüte zu gering sein, kann die Dämpfungseinrichtung bei Ausführung weiterhin in Parallelschaltung mit zwei Dämpfungseinheiten ausgebildet sein, die mit räumlichem Versatz zueinander angeordnet sind. In diesem Fall kann zumindest der Außendurchmesser des bisherigen Innenenergiespeichers vergrößert und dadurch die Steifigkeit der Dämpfungseinrichtung reduziert werden. Auf einen Innenenergiespeicher wird dann bei beiden Dämpfungseinheiten selbstverständlich verzichtet.

Zugunsten noch geringerer Steifigkeit können die beiden Dämpfungseinheiten der jeweiligen Dämpfungseinrichtung selbstverständlich auch in Reihenschaltung ausgelegt sein. Es entsteht dann ein sogenannter Weitwinkeldämpfer.

Die erfindungsgemäße Lösung wird nachfolgend anhand von Figuren erläutert. Es ist im Einzelnen gezeigt:

Fig. 1 eine Schnittdarstellung eines Torsionsschwingungsdämpfers in einer als hydrodynamischer Drehmomentwandler ausgebildeten Kopplungsvorrichtung, wobei der Torsionsschwingungsdämpfer zwischen zwei mit Radialversatz angeordneten Dämpfungseinrichtungen über Tilgermassenträger mit axial zwischen denselben angeordneten Tilgermassen verfügt, wobei ein Tilgermassenträger als Energiespeicherkanal für die radial äußere Dämpfungseinrichtung ausgebildet ist;

Fig. 2 eine Abbildung gemäß der Schnittlinie A - A in Fig. 1;

Fig. 3 eine Darstellung eines Ausschnittes aus einer Tilgermasse, zusammenwirkend mit einem Wegbegrenzungsanschlag gemäß der Schnittlinie B - B in Fig. 1;

Fig. 4 wie Fig. 1, aber mit anderer Positionierung des Wegbegrenzungsanschlags;

Fig. 5 wie Fig. 3, aber mit anderer Ausbildung der Tilgermassen und anderer Anordnung der Wegbegrenzungsanschläge gemäß der Schnittlinie C - C in Fig. 1;

Fig. 6 wie Fig. 1, aber mit Ansteuerung der radial inneren Dämpfungseinrichtung auch durch ein Kupplungselement, mit Ausbildung eines Eingangs der radial inneren Dämpfungseinrichtung mit einer Fliehkraftabstützung und mit Anordnung von Tilgermassen beidseits eines Tilgermassenträgers;

Fig. 7 wie Fig. 1, aber mit anderer Ausbildung der Tilgermassenträger;

Fig. 8 wie Fig. 7, aber mit anderer Ausbildung des Eingangs der radial inneren Dämpfungseinrichtung sowie des Ausgangs der radial äußeren Dämpfungseinrichtung;

Fig. 9 wie Fig. 7, aber mit anderer Ausbildung des Eingangs der radial inneren Dämpfungseinrichtung sowie des Ausgangs der radial äußeren Dämpfungseinrichtung;

Fig. 10 Herauszeichnung der radial inneren Dämpfungseinrichtung bei Ausstattung mit mehreren Energiespeichereinheiten in Parallelschaltung;

Fig. 11 wie Fig. 9 mit 10, aber mit Energiespeichereinheiten der radial inneren Dämpfungseinrichtung, die mit Versatz zueinander angeordnet sind;

Fig. 12 wie Fig. 11, aber mit radial innerer Dämpfungseinrichtung, bei welcher Energiespeicher unter Reihenschaltung mit Versatz zueinander angeordnet sind;

Fig. 13 wie Fig. 7, aber mit radial innerer Dämpfungseinrichtung, bei welcher Energiespeicher unter Zwischenanordnung zumindest einer Momentenübertragungseinheit in Umfangsrichtung mit einander in Wirkverbindung stehen;

Fig. 14 eine Darstellung gemäß der Schnittlinie D - D in Fig. 13;

Fig. 15 wie Fig. 13, aber mit anderer Ausführung der radial inneren Dämpfungseinrichtung.

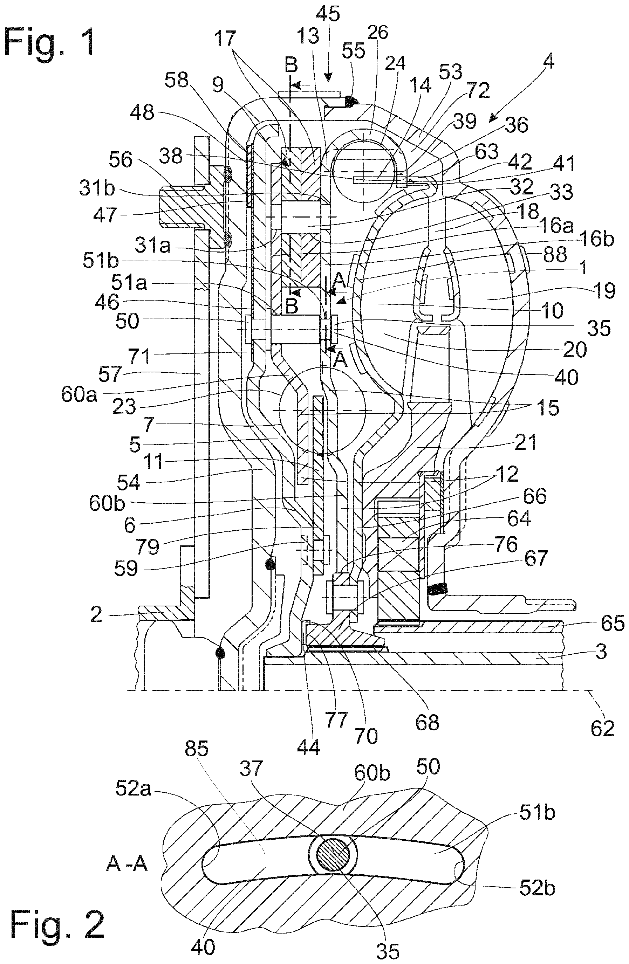

Fig. 1 zeigt eine Kopplungsvorrichtung 4 in Form eines hydrodynamischen Drehmomentwandlers. Die Kopplungsvorrichtung 4 verfügt über ein Gehäuse 45 mit einem Pumpenradträger 53, an welchem ein Gehäusedeckel 54 mittels Schweißung 55 befestigt ist. Zugunsten einer drehfesten Verbindung des Gehäuses 45 mit einem Antrieb 2, wie der Kurbelwelle einer Brennkraftmaschine, verfügt der Gehäusedeckel 54 an seiner dem Antrieb 2 zugewandten Seite über eine Mehrzahl von Befestigungszapfen 56, die über eine Antriebsplatte 57 mit dem Antrieb 2 verbunden sind. Die Verbindung zwischen Antrieb und Antriebsplatte 57 sowie zwischen der letztgenannten und den Befestigungszapfen 56 erfolgt in üblicher Weise, und ist daher in Fig. 1 nicht näher dargestellt.

An der vom Antrieb 2 abgewandten Seite des Gehäusedeckels 54 ist auf einem Abtrieb 3 in Form einer Getriebeeingangswelle ein Kupplungselement 6 eines Kupplungssystems 5 axial verlagerbar zentriert. An der dem Gehäusedeckel 54 zugewandten Seite des Kupplungselementes 6 ist mittels Abstandsstücken 50, die in vorbestimmten Umfangsabständen zueinander angeordnet und am Kupplungselement 6 befestigt sind, ein Reibbelagträger 46 fixiert, der an seiner dem Gehäusedeckel 54 zugewandten Seite einen Reibbelag 58 aufweist, der über eine Reibfläche 47 verfügt und mit einer am Gehäusedeckel 54 vorgesehenen Gegen-Reibfläche 48 in Anlage gebracht werden kann.

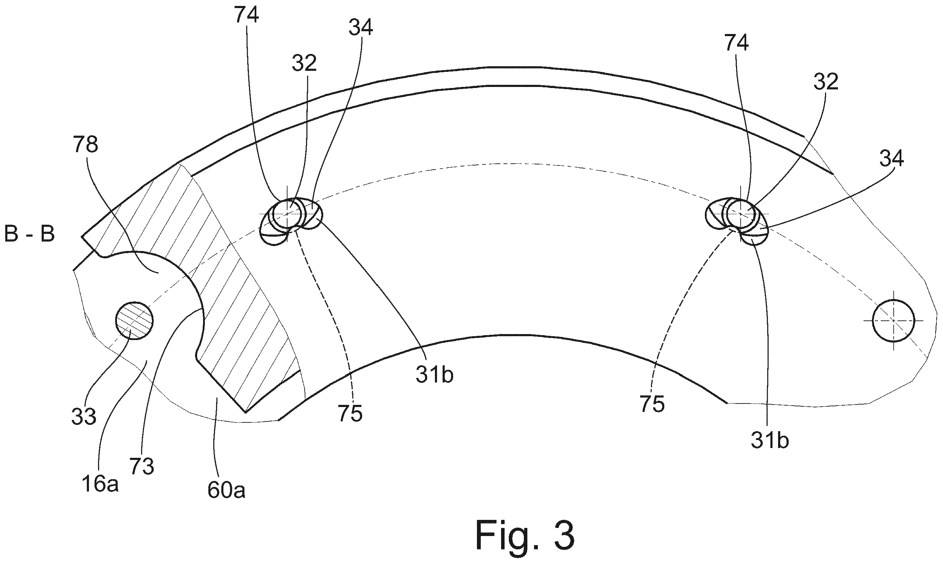

Mittels durchgedrückter Vernietung 59 ist am Kupplungselement 6 im radial inneren Bereich ein als Eingang 11 einer radial inneren Dämpfungseinrichtung 7 wirksames Trägerelement 79 befestigt, wobei die radial innere Dämpfungseinrichtung 7 mit Energiespeichern 23 versehen ist. Die Energiespeicher 23 stützen sich anderenends an zwei Trägerelementen 60a, 60b ab, die als Ausgang 12 der radial inneren Dämpfungseinrichtung 7 wirksam sind. Die Trägerelemente 60a, 60b sind beidseits des Eingangs 11 der radial inneren Dämpfungseinrichtung 7 angeordnet, und mit Aussparungen 51 a, 51 b versehen, die, wie Fig. 2 zeigt, sich in Umfangsrichtung erstrecken und von den am Kupplungselement 6 befestigten Abstandsstücken 50 durchdrungen sind. Die Abstandsstücke 50 sind in Achsrichtung gestuft, wobei sie in denjenigen Axialbereichen, in denen sie Aussparungen 51 a, 51 b durchgreifen, mit Durchmessern versehen sind, die sich von den Durchmessern der Abstandsstücke 50 axial beidseits der jeweiligen Aussparungen 51 a, 51 b unterscheiden. Durch die Abstandsstücke 50 werden die Trägerelemente 60a, 60b auf festem axialem Abstand zueinander positioniert. Dies ist wichtig, weil die Trägerelemente 60a, 60b in ihren radialen Außenbereichen über Bahnkurven 31 a, 31 b verfügen, die von axialen Endbereichen von Stufenrollen 32 durchgriffen sind. Ein jeweils axialer Mittenbereich der Stufenrollen 32 ist mit anderem, hier größerem Durchmesser ausgebildet als die axialen Endbereiche, und ist in Bahnkurven 34 von Tilgermassen 17 eines Tilgersystems 9 geführt, die in Fig. 3 dargestellt sind. Die Bahnkurven 31 a, 31 b sind, ebenso wie die Bahnkurven 34, gekrümmt ausgebildet, wobei die Krümmungen der Bahnkurven 31 a, 31 b zumindest im Wesentlichen entgegengesetzt zu den Krümmungen der Bahnkurven 34 verlaufen. Die Bahnkurven 31 a, 31 b verlaufen hierbei derart, dass, in Umfangsrichtung betrachtet, deren jeweiliges Zentrum 74 den größten Radialabstand zu einer Drehachse 62 der Kopplungsvorrichtung 4 aufweist. Entsprechend verlaufen die Bahnkurven 34 der Tilgermassen 17, in Umfangsrichtung betrachtet, derart, dass deren jeweiliges Zentrum 75 den geringsten Radialabstand zu einer Drehachse 62 der Kopplungsvorrichtung 4 aufweist.

Durch Aufnahme der Tilgermassen 17 sind die Trägerelemente 60a, 60b als Tilgermassenträger 16a, 16b wirksam.

Das in Fig. 1 vom Antrieb 2 abgewandte Trägerelement 60b ist an seinem radial äußeren Ende zu einem Energiespeicherkanal 26 geformt. Dieser Energiespeicherkanal 26 wirkt gegenüber Energiespeichern 24 einer radial äußeren Dämpfungseinrichtung 8 als Fliehkraftabstützung 29. Das Trägerelement 60b steuert die Energiespeicher 24 an, und dient somit als Eingang der radial äußeren Dämpfungseinrichtung 8, deren Ausgang durch eine Axialanformung 63 an einer Turbinenradschale 88 eines Turbinenrades 20 gebildet ist. Da das Trägerelement 60b somit gleichermaßen Ausgang 12 der radial inneren Dämpfungseinrichtung 7 und Eingang 13 der radial äußeren Dämpfungseinrichtung 8 ist, wirkt dieses Trägerelement 60b als Verbindungsvorrichtung 15 eines die beiden Dämpfungseinrichtungen 7, 8 umfassenden Torsionsschwingungsdämpfers 1, während das Turbinenrad 20 als Zusatzmasse 10 des Torsionsschwingungsdämpfers 1 wirksam ist.

Das Turbinenrad 20 bildet gemeinsam mit einem am Pumpenradträger 53 vorgesehenen Pumpenrad 19 und einem von einem Freilauf 64 getragenen und über diesen auf einer Stützwelle 65 angeordneten Leitrad 21 einen hydrodynamischen Kreis 18, wobei das Pumpenrad 19 ebenso wie das Turbinenrad 20 und das Leitrad 21 mit jeweils einer Beschaufelung versehen ist. Das Turbinenrad 20 weist einen Turbinenradfuß 66 auf, über welchen es an einer dem Turbinenrad 20 und damit der Zusatzmasse 10 zugeordneten Abtriebsnabe 67 angreift. Die Abtriebsnabe 67 ist über eine Verzahnung 68 mit dem Abtrieb 3 drehfest verbunden.

Die Abtriebsnabe 67 verfügt über eine Radialanlagefläche 76 für das dem Turbinenrad 20 benachbarte Trägerelement 60b und über eine Axialanlagerfläche 77 für eine Axiallagerung 44, welche einen Anschlag 70 bildet für das Kupplungselement 6 in vom Antrieb 2 fortweisender Richtung. Das Kupplungselement 6 kommt an dem Anschlag 70 in Anlage, wenn in einem Druckraum 71, der sich axial zwischen dem Gehäusedeckel 54 und dem Kupplungselement 6 erstreckt, ein Überdruck anliegt gegenüber einem Kühlraum 72, der sich an der vom Druckraum 71 abgewandten Seite befindet. In dieser Position des Kupplungselementes 6 nimmt dieses und damit das Kupplungssystem 5 seine Ausrückposition ein, während dann, wenn der Kühlraum 72 mit höherem Druck gegenüber dem Druckraum 71 beaufschlagt ist, das Kupplungselement 6 in Richtung zum Gehäusedeckel 54 beaufschlagt ist, und dadurch der am Reibbelagträger 46 vorgesehene Reibbelag 58 mit seiner Reibfläche 47 in Wirkverbindung mit der Gegen-Reibfläche 48 am Gehäusedeckel 54 gebracht ist. In dieser Position des Kupplungselementes 6 nimmt dasselbe und damit das Kupplungssystem 5 seine Einrückposition ein.

In der Einrückposition wird ein vom Antrieb 2 geliefertes und über das Gehäuse 45 übertragenes Drehmoment auf das Kupplungselement 6 geleitet. Im radial inneren Bereich des Kupplungselementes 6 wird das Drehmoment über den Eingang 11 auf die radial innere Dämpfungseinrichtung 7 übertragen. Die Energiespeicher 23 dieser Dämpfungseinrichtung 7 können sich unter der Wirkung des Drehmomentes stauchen, und bewirken hierdurch eine Relativdrehbewegung zwischen dem Eingang 11 und den Trägerelementen 60a, 60b des Ausgangs 12 der radial inneren Dämpfungseinrichtung 7. Diese Relativdrehbewegung und damit die Stauchung der Energiespeicher 23 kann sich solange fortsetzen, bis die als Profilierung 37 wirksamen Abstandsstücke 50 am jeweiligen umfangsseitigen Ende 52a, 52b der als Gegen-Profilierung 40 wirksamen Aussparungen 51 a, 51 b in Anlage gekommen sind. Die Abstandsstücke 50 bilden somit in Zusammenwirkung mit den Aussparungen 51 a, 51 b eine Drehwinkelbegrenzung 35 für die radial innere Dämpfungseinrichtung 7.

Beschleunigungen an den Tilgermassenträgern 16a, 16b infolge von Torsionsschwingungen bewirken eine Auslenkung der Stufenrollen 32 der Tilgermassen 17 aus deren in Fig. 3 gezeigter Ruheposition, die sich fliehkraftbedingt an den radial äußersten Bereichen der Bahnkurven 31 a, 31 b einstellt. Unter der Wirkung der Torsionsschwingungen bewegen sich die Stufenrollen 32 entlang der jeweiligen Bahnkurve 31 a, 31 b und 34, und werden aufgrund der Verläufe der Bahnkurven 31 a, 31 b hierbei nach radial innen gezwungen.

Bei Einleitung sehr starker Torsionsschwingungen werden die Tilgermassen 17 so stark in Umfangsrichtung ausgelenkt, dass sie mit umfangsseitigen Anschlagflächen 73 in Anlage an Wegbegrenzungsanschlägen 33 gelangen. Solche Wegbegrenzungsanschläge 33 können, wie Fig. 3 zeigt, an Ausnehmungen 78 der Tilgermassenträger 16a, 16b aufgenommen sein. Die Wegbegrenzungsanschläge 33 und/oder die Anschlagflächen 73 können zur Dämpfung der Stoßbelastung aus Material hergestellt oder mit demselben umkleidet sein, das sich unter Stoßeinwirkung elastisch verformt.

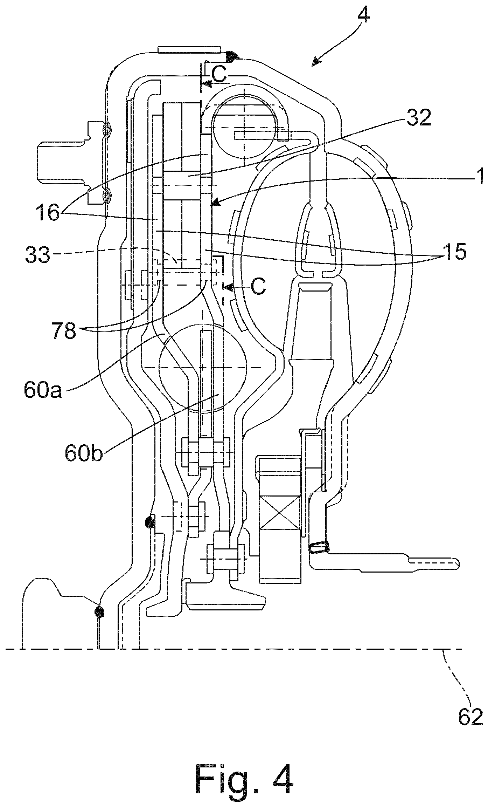

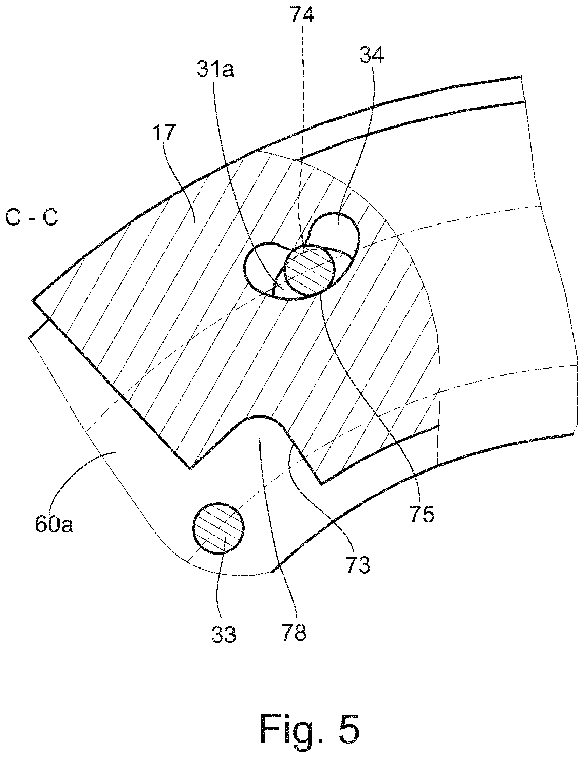

Abweichend von der Ausführung gemäß den Fig. 1 und 3 sind bei der Ausführung gemäß Fig. 4 und 5 die Wegbegrenzungsanschläge 33 und die Ausnehmungen 78 der Tilgermassenträger 16a, 16b zur Bildung der Anschlagflächen 73 radial weiter innen vorgesehen. Dadurch wird in Umfangsrichtung Bauraum eingespart, der für die Tilgermassen 17 zur Verfügung steht. Die Tilgermassen 17 bauen dann aber in Radialrichtung größer, wenn Sie die gleiche Trägheitswirkung erzeugen sollen.

Wenn sich die Stärke eingeleiteter Torsionsschwingungen wieder reduziert, bewegen sich die Stufenrollen 32 und damit die Tilgermassen 17 unter Fliehkraftwirkung in Richtung des jeweiligen Zentrums 74 der Bahnkurven 31 a, 31 b.

Die zuvor beschriebenen Bewegungen der Tilgermassen 17 erfolgen, sofern diese, wie auch bei Fig. 3, über jeweils zwei Stufenrollen 32 an den Trägerelementen 60a, 60b aufgenommen sind, zumindest im Wesentlichen mittels rotationsfreier Bewegung.

Das Trägerelement 60b und damit die Verbindungsvorrichtung 15 verfügt im Bereich des Energiespeicherkanals 26 über eine Verzahnung 41, die mit einer an der Axialanformung 63 des Turbinenrades 20 vorgesehenen Gegen-Verzahnung 42 in spielbehafteter Verbindung steht. Das Spiel zwischen den beiden Verzahnungen 41, 42 gibt die Größe der Drehwinkelauslenkung zwischen der Verbindungsvorrichtung 15 und dem Turbinenrad 20 und damit zwischen dem Eingang 13 und dem Ausgang 14 der radial äußeren Dämpfungseinrichtung 8 vor, und begrenzt somit die Stauchung der Energiespeicher 24 dieser Dämpfungseinrichtung 8. Die durch die Verzahnung 41 gebildete Profilierung 38 sowie die durch die Gegen-Verzahnung 42 gebildete Gegen-Profilierung 39 bildet somit eine Drehwinkelbegrenzung 36 für die radial äußere Dämpfungseinrichtung 8.

Da der Ausgang der radial äußeren Dämpfungseinrichtung 8 durch einen Bestandteil des Turbinenrades 20, nämlich durch die Axialanformung 63 gebildet wird, dient das Turbinenrad 20 zur Übertragung des eingeleiteten Momentes über die Abtriebsnabe 67 auf den Abtrieb 3. Aufgrund der massenbedingten Trägheitswirkung des Turbinenrades 20 wirkt dieses als Zusatzmasse 10, die abtriebsseitig der radial äußeren Dämpfungseinrichtung 8 und damit abtriebsseitig des Torsionsschwingungsdämpfers 1 wirksam ist. Im Gegensatz dazu wirken die Tilgermassen 17 aufgrund ihrer Aufnahme an der Verbindungsvorrichtung 15 zwischen den beiden Dämpfungseinrichtungen 7 und 8.

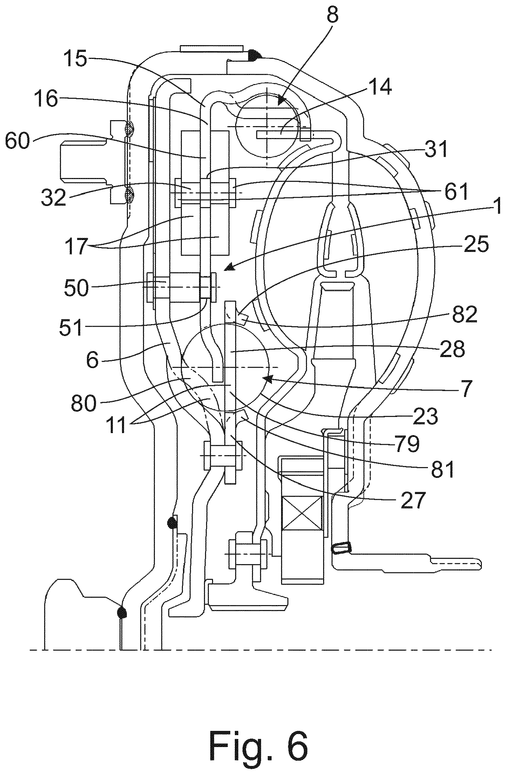

Bei der Ausführung des Torsionsschwingungsdämpfers 1 gemäß Fig. 6 wird der Eingang 11 für die Energiespeicher 23 der radial inneren Dämpfungseinrichtung 7 nicht allein durch das am Kupplungselement 6 befestigte Trägerelement 79 gebildet, sondern zusätzlich durch eine Ausformung 80 am Kupplungselement 6. An dem Trägerelement 79 sind Ausnehmungen 28 für die Energiespeicher 23 vorgesehen, so dass dieses als Energiespeicherträger 27 wirksam ist. Radial außerhalb sowie radial innerhalb der Ausnehmungen 28 sind Umbiegungen 81, 82 vorgesehen, von denen die radial äußere Umbiegung 81 als Fliehkraftabstützung 25 für den jeweiligen Energiespeicher 23 wirksam ist.

Der einzelne Tilgermassenträger 16 wird durch ein Trägerelement 60 gebildet, das zugleich als Verbindungsvorrichtung 15 zwischen den beiden Dämpfungseinrichtungen 7, 8 wirksam ist. Das Trägerelement 60 ist über die im Kupplungselement 6 befestigten Abstandsstücke 50 zentriert, indem diese - mit Spiel in Umfangsrichtung - in die Aussparungen 51 eingreifen.

In den jeweiligen Bahnkurven 31 des Trägerelementes 60 ist jeweils eine Stufenrolle 32 aufgenommen, welche die Tilgermassen 17 beidseits des Tilgermassenträgers 16 aufnimmt, und mittels Trägerelementenköpfen 61 axial sichert.

Im Vergleich zur Ausführung gemäß Fig. 1 ist die Ausführung gemäß Fig. 6 im Hinblick auf Lagerung und Aufbau des Tilgermassenträgers 16 einfacher gestaltet. Außerdem ist die Bauteilezahl reduziert.

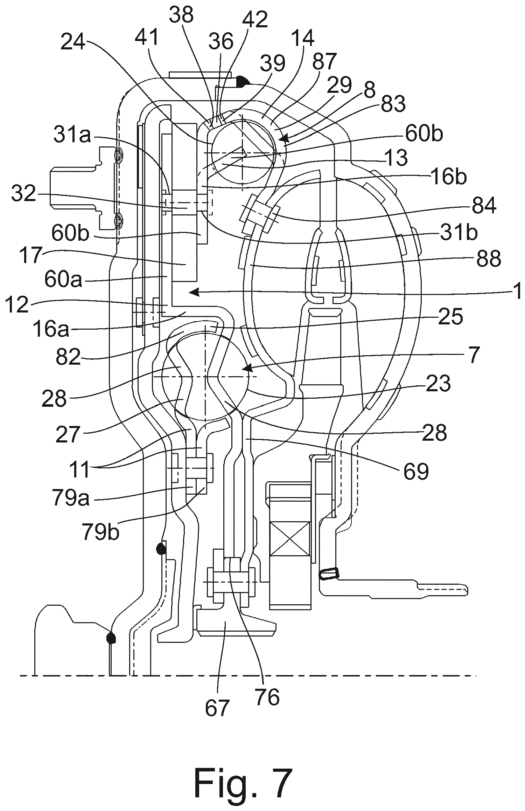

Fig. 7 zeigt eine Ausführung, bei welcher der vom Turbinenrad 20 fernere Tilgermassenträger 16a an der Radialanlagefläche 76 der Abtriebsnabe 67 zentriert ist. Dieser Tilgermassenträger 16a dient mittels zur Aufnahme von Energiespeichern 23 der radial inneren Dämpfungseinrichtung 7 bestimmten Ausnehmungen 28 zur Ansteuerung dieser Energiespeicher 23, während der zum Turbinenrad 20 benachbarte Tilgermassenträger 16b zur Ansteuerung der Energiespeicher 24 der radial äußeren Dämpfungseinrichtung 8 vorgesehen ist. Anders als bei den bislang beschriebenen Ausführungen ist bei der Ausführung nach Fig. 7 also der Ausgang 12 der radial inneren Dämpfungseinrichtung 7 an einem anderen der Tilgermassenträger 16a, 16b und damit der Trägerelemente 60a, 60b realisiert als der Eingang 13 der radial äußeren Dämpfungseinrichtung 8. Allerdings nehmen auch bei dieser Ausführung die beiden Tilgermassenträger 16a, 16b die Tilgermassen 17 axial zwischen sich auf.

Zum Eingang 11 der radial inneren Dämpfungseinrichtung 7 ist anzumerken, dass dieser über zwei Trägerelemente 79a, 79b verfügt, von denen eines, nämlich das Trägerelement 79a, nicht nur über Ausnehmungen 28 für die Energiespeicher 23 verfügt und somit als Energiespeicherträger 27 wirksam ist, sondern auch über eine als Fliehkraftabstützung 25 wirksame Umbiegung 82 aufweist.

Das bereits erwähnte Trägerelement 60b ist, abweichend von der Ausführung gemäß Fig. 1, ohne Energiespeicherkanal für die Energiespeicher 24 der radial äußeren Dämpfungseinrichtung 8 ausgebildet. Allerdings weist dieses Trägerelement 60b die durch die Verzahnung 41 gebildete Profilierung 38 auf. Gemeinsam mit der durch die Gegen-Verzahnung 42 gebildete Gegen-Profilierung 39 am Ausgang 14 wird somit die Drehwinkelbegrenzung 36 für die radial äußere Dämpfungseinrichtung 8 gebildet.

Der Ausgang 14 verfügt zur Bildung einer Fliehkraftabstützung 29 für die Energiespeicher 24 über eine als Energiespeicherkanal 87 wirksame Umformung 83, die durch Vernietung 84 mit der Turbinenradschale 88 drehfest mit dem Turbinenrad 20 ist.

Schließlich ist festzustellen, dass sich das Trägerelement 60a in Richtung zum Turbinenrad 20 an einem dem Turbinenradfuß 66 zugeordneten Axialanschlag 69 abzustützen vermag.

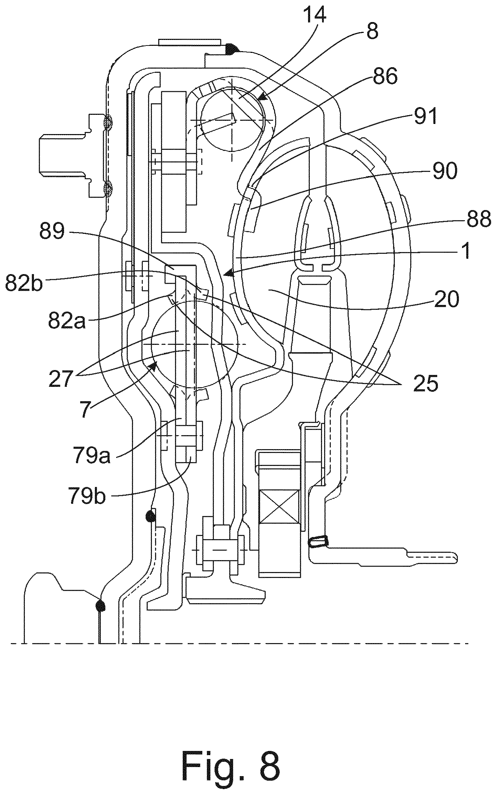

Bei der Ausführung nach Fig. 8 sind beide Trägerelemente 79a, 79b des Eingangs 11 der radial inneren Dämpfungseinrichtung 7 als Energiespeicherträger 27 für die Energiespeicher 23 dieser Dämpfungseinrichtung 7 ausgebildet, indem die Trägerelemente 79a, 79b jeweils Ausnehmungen 28 für die Energiespeicher 23 aufweisen. Radial außerhalb der Ausnehmungen 28 sind Umbiegungen 82a, 82b vorgesehen, die durch ein an einem der Trägerelemente 79a, 79b vorgesehenes Klammerelement 89 in Axialanlage aneinander gehalten sind. Die Umbiegungen 82a, 82b bilden gemeinsam eine Fliehkraftabstützung 25 für die radial innere Dämpfungseinrichtung 7.

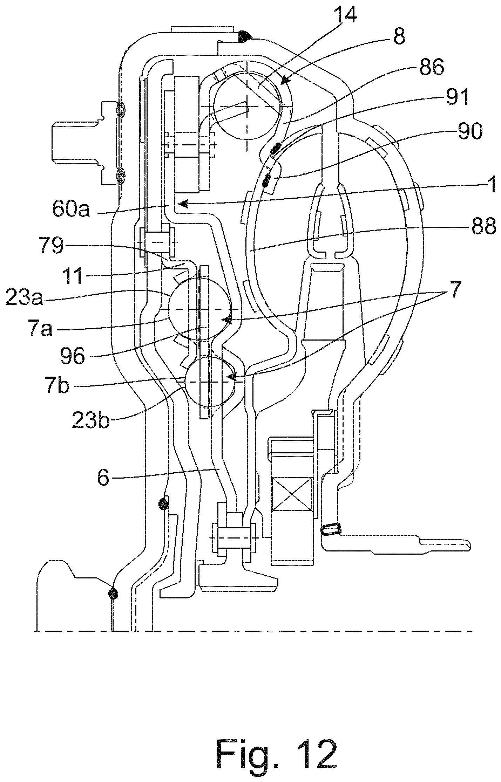

Das Trägerelement 86 des Ausgangs 14 der radial äußeren Dämpfungseinrichtung 8 weist an seiner dem Turbinenrad 20 zugewandten Seite Laschen 90 auf, die nach Durchdringung von in der Turbinenradschale 88 vorgesehenen Öffnungen 91 mit der Turbinenradschale 88 verrollt und damit befestigt werden. Zusätzlich kann eine Schweißung, insbesondere Laserschweißung oder eine Lötung erfolgen. Eine solche Lösung ist in Fig. 12 gezeigt.

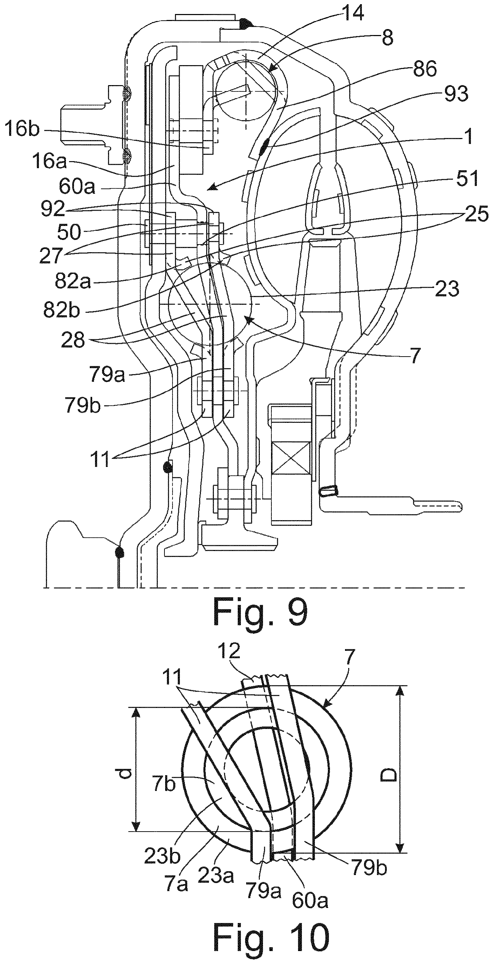

Bei der Ausführung nach Fig. 9 sind beide Trägerelemente 79a, 79b des Eingangs 11 der radial inneren Dämpfungseinrichtung 7 als Energiespeicherträger 27 für die Energiespeicher 23 dieser Dämpfungseinrichtung 7 ausgebildet, indem die Trägerelemente 79a, 79b jeweils Ausnehmungen 28 für die Energiespeicher 23 aufweisen. Radial außerhalb der Ausnehmungen 28 sind Umbiegungen 82a, 82b vorgesehen, die gemeinsam eine Fliehkraftabstützung 25 für die radial innere Dämpfungseinrichtung 7 bilden. Die Trägerelemente 79a, 79b sind durch die am Kupplungselement 6 befestigten Abstandsstücke 50 zentriert und in Achsrichtung zueinander sowie gegenüber dem Kupplungselement 6 positioniert. Hierfür durchgreifen die Abstandsstücke 50 Öffnungen 92 in den Trägerelementen 79a, 79b. Weiterhin durchgreifen die Abstandsstücke 50 die Aussparungen 51 im Trägerelement 60a, also des Tilgermassenträgers 16a.

Das Trägerelement 86 des Ausgangs 14 der radial äußeren Dämpfungseinrichtung 8 ist mit seiner dem Turbinenrad 20 zugewandten Seite mittels einer Schweißung 93, vorzugsweise einer Laserschweißung, an der Turbinenradschale 88 befestigt.

In bevorzugter Ausführung können sowohl bei der radial inneren Dämpfungseinrichtung 7 als auch bei der radial äußeren Dämpfungseinrichtung 8 Energiespeicher 23, 24 vorgesehen sein, bei denen jeweils die Windungen einer äußeren Dämpfungseinheit die Windungen einer inneren Dämpfungseinheit umschließen. Beispielhaft sind in Fig. 10 für die radial innere Dämpfungseinrichtung 7 die Dämpfungseinheiten 7a, 7b gezeigt. Die Energiespeicher 23a, 23b dieser Dämpfungseinheiten 7a, 7b werden unter der Voraussetzung gleicher Erstreckungslängen in Umfangsrichtung parallel zueinander durch die Trägerelemente 79a, 79b des Eingangs 11 beaufschlagt, und stützen sich anderenends am Trägerelement 60a des Ausganges 12 ab.

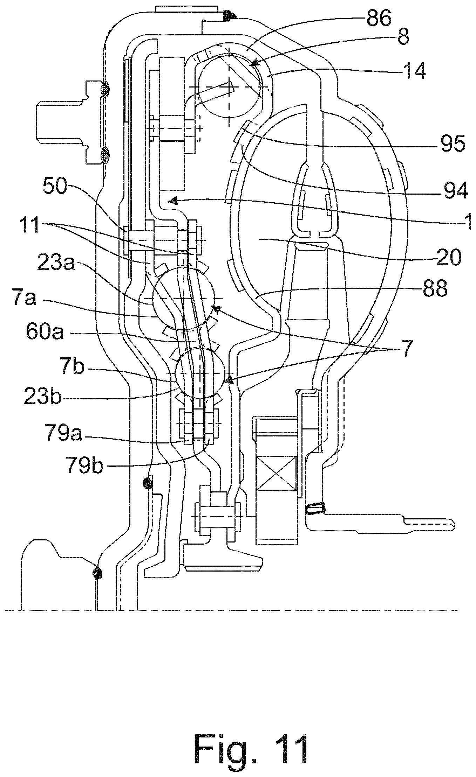

Fig. 11 zeigt, bei ansonsten gleicher Ausgestaltung der radial inneren Dämpfungseinrichtung 7 wie bei Fig. 9, die Dämpfungseinheiten 7a, 7b mit Radialversatz zueinander. Wird bei einer der Dämpfungseinheiten, beispielsweise bei der Dämpfungseinheit 7a, der in Fig. 10 gezeigte Durchmesser D für die Energiespeicher 23a unverändert beibehalten, bei der anderen Dämpfungseinheit, also der Dämpfungseinheit 7b, der in Fig. 10 gezeigte Durchmesser d für die Energiespeicher 23b größer gewählt, dann wird aufgrund der eingangs bereits kommentierten Formel $C = dF/ds = (G \times d^4) / (8 \times D^3 \times n)$ die Steifigkeit der Dämpfungseinrichtung 7 trotz weiterhin paralleler Beaufschlagung der Dämpfungseinheiten 7a, 7b reduziert. Andererseits können aufgrund dieser Zusammenhänge auch kleinere Durchmesser D und d bei den Dämpfungseinheiten 7a, 7b ausgewählt werden, um die Steifigkeit zu erzielen, die bei der Ausführung gemäß Fig. 10 vorhanden ist. Dadurch reduziert sich, wie Fig. 11 im Vergleich zu Fig. 9 zeigt, die axiale Ausdehnung der radial inneren Dämpfungseinrichtung 7.

Bei der radial äußeren Dämpfungseinrichtung 8 ist gemäß Fig. 11 das Trägerelement 86 des Ausgangs 14 an seiner dem Turbinenrad 20 zugewandten Seite mit Öffnungen 94 versehen, in welche Schaufellappen 95 des Turbinenrades 20 eingesteckt und verrollt werden.

Sind bei paralleler Beaufschlagung zumindest einer der Dämpfungseinrichtungen sämtliche Möglichkeiten zur Reduzierung der Steifigkeit der Energiespeicher ausgeschöpft, dann können die Dämpfungseinheiten auch in Reihenschaltung beaufschlagt werden. Fig. 12 gibt hierzu eine Ausführung an dem Beispiel der radial inneren Dämpfungseinrichtung 7 mit den Dämpfungseinheiten 7a, 7b. Die eingangsseitige Beaufschlagung der Dämpfungseinheit 7a erfolgt durch das am Kupplungselement 6 befestigte Trägerelement 79. Die Energiespeicher 23a der Dämpfungseinheit 7a stützen sich anderenends an einem Verbindungsträger 96 ab, durch welchen die Energiespeicher 23b der Dämpfungseinheit 7b beaufschlagbar sind, und der als Masseelement zwischen den Dämpfungseinheiten 7a, 7b wirksam ist. Die Energiespeicher 23b schließlich stützen sich anderenends an dem Trägerelement 60a ab.

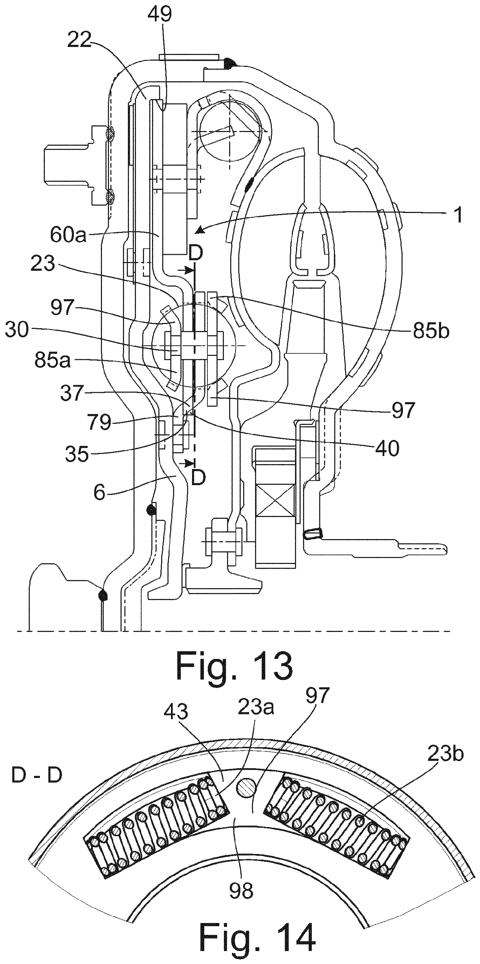

Bei der in Fig. 13 und 14 gezeigten radial inneren Dämpfungseinrichtung 7 stehen die Energiespeicher 23a, 23b in Umfangsrichtung unter Zwischenschaltung einer Momentenübertragungseinheit 97 in Wirkverbindung miteinander. Die Momentenübertragungseinheit 97 weist einen Ringkörper 98 und radial von demselben abstehende Ansteuervorsprünge 43 auf. Die Ansteuervorsprünge 43 sind in vorbestimmten Umfangsabständen an dem Ringkörper 98 aufgenommen, und greifen in Umfangsrichtung zwischen je zwei Energiespeicher 23a, 23b.

Das gemäß Fig. 13 am Kupplungselement 6 befestigte Trägerelement 79 ist zur Beaufschlagung des ersten Energiespeichers 23a vorgesehen, der sich in Umfangsrichtung anderenends an zwei Momentenübertragungselementen 85a, 85b der Momentenübertragungseinheit 97 abstützt. Diese Momentenübertragungselemente 85a, 85b können wiederum mit dem zweiten Energiespeicher 23b in Wirkverbindung gebracht werden, wobei sich der zweite Energiespeicher 23b in Umfangsrichtung anderenends am Trägerelement 60a abstützt. Verständlicherweise sind die beiden Momentenübertragungselemente 85a, 85b der Momentenübertragungseinheit 97 sowohl gegenüber dem Trägerelement 79, also dem Eingang 11 der radial inneren Dämpfungseinrichtung 7, als auch gegenüber dem Trägerelement 60a, also dem Ausgang 12 der radial inneren Dämpfungseinrichtung 7, relativ verdrehbar. Die beiden Momentenübertragungselemente 85a, 85b nehmen sowohl ein mit dem Kupplungselement 6 verbundenes Trägerelement 79 des Eingangs 11 als auch das Trägerelement 60a axial zwischen sich auf. Es sind Stufenzapfen 101 vorgesehen, um die vorgenannten Bauteile in fester axialer Relativposition zueinander zu halten.

Zur Begrenzung der Relativdrehbewegbarkeit zwischen dem Eingang 11 und dem Ausgang 12 der radial inneren Dämpfungseinrichtung 7 verfügt das Trägerelement 79 über eine Profilierung 37, in welche zur Bildung einer Drehwinkelbegrenzung 35 eine Gegen-Profilierung 40 mit vorbestimmtem Spiel in Umfangsrichtung eingreift. Die Profilierung 37 kann ebenso wie die Gegen-Profilierung 40 durch eine Verzahnung gebildet sein. Die Drehwinkelbegrenzung befindet sich radial innerhalb der Energiespeicher 23.

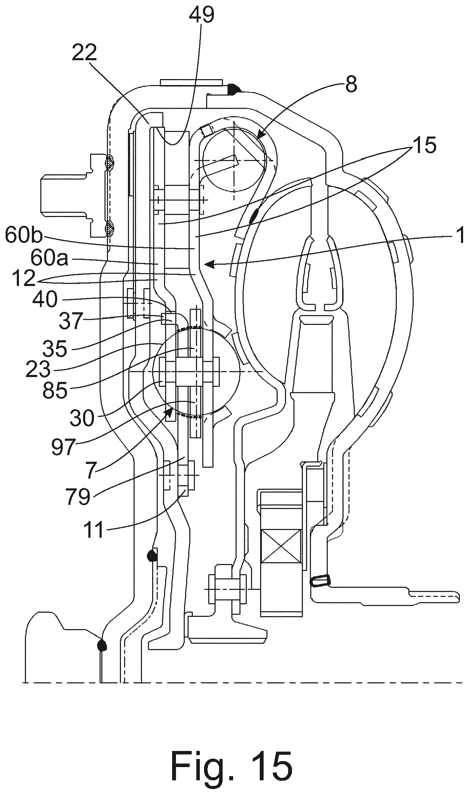

Während bei der Ausführung gemäß Fig. 13 der zweite Energiespeicher 23b umfangsseitig einerends durch zwei Momentenübertragungselemente 85a, 85b und anderenends durch ein einzelnes Trägerelement 60a beaufschlagbar ist, zeigt Fig. 15 eine Lösung, bei welcher der zweite Energiespeicher 23b umfangsseitig einerends durch ein einzelnes Momentenübertragungselement 85 der Momentenübertragungseinheit 97 und anderenends durch zwei Trägerelemente 60a, 60b beaufschlagbar ist, wobei die beiden letztgenannten als Verbindungsvorrichtung 15 zwischen der radial inneren Dämpfungseinrichtung 7 und der radial äußeren Dämpfungseinrichtung 8 wirksam sind. Die beiden Trägerelemente 60a, 60b der Verbindungsvorrichtung 15 nehmen sowohl ein mit dem Kupplungselement 6 verbundenes Trägerelement 79 des Eingangs 11 als auch das Momentenübertragungselement 85 der Momentenübertragungseinheit 97 axial zwischen sich auf. Es sind Stufenzapfen 30 vorgesehen, um die vorgenannten Bauteile in fester axialer Relativposition zueinander zu halten. Auch bei der Ausführung gemäß Fig. 15 findet sich wiederum eine Drehwinkelbegrenzung 35 zwischen dem Eingang 11 und dem Ausgang 12 der radial inneren Dämpfungseinrichtung 7. Im Gegensatz zur Lösung gemäß der Ausführung nach Fig. 13 sitzt die Drehwinkelbegrenzung 35 bei der Ausführung nach Fig. 15 jedoch radial außerhalb der Energiespeicher 23.

Die Ausführungen gemäß Fig. 13 und 15 weisen eine weitere Besonderheit auf, indem das jeweilige, dem Kupplungselement 6 benachbarte Trägerelement 60a durch das Kupplungselement 6 zentriert ist. Hierzu weist das Kupplungselement 6 an einem Außenumfang eine Abkröpfung 22 auf, die an ihrer radialen Innenseite eine Radialanlagefläche 49 für das Trägerelement 60a bereitstellt. Über das Trägerelement 60a wird das Trägerelement 60b und somit auch die Tilgermassen 17 zentriert.

Bezugszeichen

| | |
|---|---|
| 1 | Torsionsschwingungsdämpfer |
| 2 | Antrieb |
| 3 | Abtrieb |
| 4 | Kopplungsvorrichtung |
| 5 | Kupplungssystem |
| 6 | Kupplungselement |
| 7 | Dämpfungseinrichtung radial innen |
| 8 | Dämpfungseinrichtung radial außen |
| 9 | Tilgersystem |
| 10 | Zusatzmasse |
| 11 | Eingang der Dämpfungseinrichtung radial innen |
| 12 | Ausgang der Dämpfungseinrichtung radial innen |
| 13 | Eingang der Dämpfungseinrichtung radial außen |
| 14 | Ausgang der Dämpfungseinrichtung radial außen |
| 15 | Verbindungsvorrichtung |
| 16 | Tilgermassenträger |
| 17 | Tilgermasse |
| 18 | hydrodynamischer Kreis |
| 19 | Pumpenrad |
| 20 | Turbinenrad |
| 21 | Leitrad |
| 22 | Abkröpfung |
| 23 | Energiespeicher der Dämpfungseinrichtung radial innen |
| 24 | Energiespeicher der Dämpfungseinrichtung radial außen |
| 25 | Fliehkraftabstützung |
| 26 | Energiespeicherkanal am Tilgermassenträger |
| 27 | Energiespeicherträger |
| 28 | Ausnehmungen für Energiespeicher |
| 29 | Fliehkraftabstützung |
| 30 | Stufenzapfen |
| 31 | Bahnkurve |
| 32 | Stufenrollen |
| 33 | Wegbegrenzungsanschläge |
| 34 | Bahnkurve |
| 35 | Drehwinkelbegrenzung der Dämpfungseinrichtung radial innen |
| 36 | Drehwinkelbegrenzung der Dämpfungseinrichtung radial außen |
| 37 | Profilierung an der radial inneren Drehwinkelbegrenzung |
| 38 | Profilierung an der radial äußeren Drehwinkelbegrenzung |
| 39 | Gegen-Profilierung an der radial äußeren Drehwinkelbegrenzung |
| 40 | Gegen-Profilierung an der radial inneren Drehwinkelbegrenzung |
| 41 | Verzahnung |
| 42 | Gegen-Verzahnung |
| 43 | Ansteuervorsprünge |
| 44 | Axiallagerung |
| 45 | Gehäuse |
| 46 | Trägerelement |
| 47 | Reibfläche |
| 48 | Gegen- Reibfläche |
| 49 | Radialanlagefläche |
| 50 | Abstandsstücke |
| 51 | Aussparungen |
| 52 | Umfangsseitige Enden der Kurvenbahnen 34 |
| 53 | Pumpenradträger |
| 54 | Gehäusedeckel |
| 55 | Schweißung |
| 56 | Befestigungszapfen |
| 57 | Antriebsplatte |
| 58 | Reibbelag |
| 59 | Durchgedrückte Vernietung |
| 60 | Trägerelement |
| 61 | Trägerelementenkopf |
| 62 | Drehachse |
| 63 | Axialanformung |
| 64 | Freilauf |
| 65 | Stützwelle |
| 66 | Turbinenradfuß |
| 67 | Abtriebsnabe |
| 68 | Verzahnung |
| 69 | Axialanschlag |
| 70 | Anschlag |
| 71 | Druckraum |
| 72 | Kühlraum |
| 73 | Anschlagflächen |
| 74 | Zentrum der Bahnkurve 31 |
| 75 | Zentrum der Bahnkurve 34 |
| 76 | Radialanlagefläche |
| 77 | Axialanlagefläche |
| 78 | Ausnehmungen |

| 79 | Trägerelement |
|---|---|
| 80 | Ausformung |
| 81 | Umbiegung |
| 82 | Umbiegung |
| 83 | Umformung |
| 84 | Vernietung |
| 85 | Momentenübertragungselement |
| 86 | Trägerelement am Ausgang 14 |
| 87 | Energiespeicherkanal am Ausgang 14 |
| 88 | Turbinenradschale |
| 89 | Klammerelement |
| 90 | Lasche |
| 91 | Öffnung |
| 92 | Öffnung |
| 93 | Schweißung |
| 94 | Öffnung |
| 95 | Schaufellappen |
| 96 | Verbindungsträger |
| 97 | Momentenübertragungseinheit |
| 98 | Ringkörper |

**Patentansprüche**

1. Torsionsschwingungsdämpfer (1) für eine zur Herstellung einer Wirkverbindung zwischen einem Antrieb (2) und einem Abtrieb (3) dienende Kopplungsvorrichtung (4), die über ein Kupplungssystem (5) mit einem zwischen einer Einrückposition, in welcher eine Wirkverbindung zwischen dem Antrieb (2) und dem Abtrieb (3) herstellbar ist, und einer Ausrückposition, in welcher diese Wirkverbindung aufgehoben ist, verlagerbares Kupplungselement (6) verfügt, sowie über zumindest zwei mit Radialversatz zueinander angeordnete Dämpfungseinrichtungen (7, 8), denen zumindest ein zwischen den beiden Dämpfungseinrichtungen (7, 8) wirksames Tilgersystem (9) und zumindest eine von dem Tilgersystem (9) unabhängige Zusatzmasse (10) zugeordnet sind, wobei das Kupplungselement (6) mit einem Eingang (11) einer der Dämpfungseinrichtungen (7, 8) und ein Ausgang (14) einer anderen der Dämpfungseinrichtungen (7, 8) mit dem Abtrieb (3) in Wirkverbindung stehen, und der Ausgang (12) einer der Dämpfungseinrichtungen (7, 8) mit einem Eingang (13) einer anderen der Dämpfungseinrichtungen (7, 8) mittels einer Verbindungsvorrichtung (15) in Wirkverbindung steht, die wenigstens einen Tilgermassenträger (16; 16a, 16b) zur Aufnahme zumindest einer Tilgermasse (17) des Tilgersystems (9) aufweist, **dadurch gekennzeichnet, dass** das Kupplungselement (6) mit dem Eingang (11) der radial inneren Dämpfungseinrichtung (7) und der Ausgang (14) der radial äußeren Dämpfungseinrichtung (8) über die Zusatzmasse (10) mit dem Abtrieb (3) in Wirkverbindung steht, während der Ausgang (12) der radial inneren Dämpfungseinrichtung (7) über die Verbindungsvorrichtung (15) mit dem Eingang (13) der radial äußeren Dämpfungseinrichtung (8) wirkverbunden ist, so dass die Zusatzmasse (10) und die Verbindungsvorrichtung (15) relativ zueinander bewegbar vorgesehen sind.

2. Torsionsschwingungsdämpfer nach Anspruch 1 mit einer Kopplungsvorrichtung (4), die zusätzlich zu dem Kupplungssystem (5) und den Dämpfungseinrichtungen (7, 8) einen hydrodynamischen Kreis (18) aufweist, der zumindest über ein Pumpenrad (19) und über ein Turbinenrad (20) verfügt, **dadurch gekennzeichnet, dass** das Turbinenrad (20) als die den Dämpfungseinrichtungen (7, 8) zugeordnete Zusatzmasse (10) wirksam ist und über eine Abtriebsnabe (67) mit dem Abtrieb (3) in Wirkverbindung steht.

3. Torsionsschwingungsdämpfer nach Anspruch 1 mit Dämpfungseinrichtungen (7, 8), die jeweils über Energiespeicher (23, 24) verfügen, **dadurch gekennzeichnet, dass** zumindest eine Dämpfungseinrichtung (7; 8) über eine Fliehkraftabstützung (25; 29) für die Energiespeicher (23; 24) verfügt.

4. Torsionsschwingungsdämpfer nach Anspruch 3, **dadurch gekennzeichnet, dass** zumindest die Fliehkraftabstützung (29) einer Dämpfungseinrichtung (8) mit einem Energiespeicherkanal (26; 87) versehen ist, durch welchen die Energiespeicher (24) zumindest im Wesentlichen nach radial außen abgestützt sind.

5. Torsionsschwingungsdämpfer nach Anspruch 4, **dadurch gekennzeichnet, dass** der Energiespeicherkanal (26; 87) entweder an der zwischen den beiden Dämpfungseinrichtungen (7, 8) wirksamen Verbindungsvorrichtung (15) aufgenommen oder der Zusatzmasse (10) zugeordnet ist.

6. Torsionsschwingungsdämpfer nach Anspruch 5, **dadurch gekennzeichnet, dass** die Verbindungsvorrichtung (15) über zumindest ein Trägerelement (60; 60a; 60b) verfügt, an welchem der Energiespeicherkanal (26) vorgesehen ist.

7. Torsionsschwingungsdämpfer nach Anspruch 5, **dadurch gekennzeichnet, dass** der mit der Zusatzmasse (10) verbundene Ausgang (14) der radial äußeren Dämpfungseinrichtung (8) den Energiespeicherkanal (87) aufweist.

8. Torsionsschwingungsdämpfer nach Anspruch 3, bei welchem der Eingang (11) wenigstens einer Dämpfungseinrichtung (7) über zumindest einen Energiespeicherträger (27) verfügt, der Ausnehmungen (28) für die Energiespeicher (23) aufweist, **dadurch gekennzeichnet, dass** dem zumindest einen Energiespeicherträger (27) eine Fliehkraftabstützung (25) für Energiespeicher (23) der Dämpfungseinrichtung (7) zugeordnet ist.

9. Torsionsschwingungsdämpfer nach Anspruch 8, **dadurch gekennzeichnet, dass** der über eine Fliehkraftabstützung (25) verfügende Energiespeicherträger (27) mit einer die Fliehkraftabstützung (25) bildenden Umbiegung (82; 82a, 82b) versehen ist, mit welcher der Energiespeicherträger (27) die Energiespeicher (23) der radial inneren Dämpfungseinrichtung (7) zumindest im Wesentlichen nach radial außen abstützt.

10. Torsionsschwingungsdämpfer nach Anspruch 1, **dadurch gekennzeichnet, dass** zumindest ein Trägerelement (60; 60a, 60b) der Verbindungsvorrichtung (15) als Tilgermassenträger (16; 16a, 16b) ausgebildet ist

11. Torsionsschwingungsdämpfer nach Anspruch 10, **dadurch gekennzeichnet, dass**, bei Ausbildung der Verbindungsvorrichtung (15) mit einem einzelnen Tilgermassenträger (16) die Tilgermassen (17a, 17b) beidseits des Tilgermassenträgers (16) aufgenommen sind, während bei Ausbildung der Verbindungsvorrichtung (15) mit einer Mehrzahl an Tilgermassenträgern (16a, 16b) die Tilgermassen (17a, 17b) in einem zwischen zwei Tilgermassenträgern (16a, 16b) vorgesehenen Axialbereich aufgenommen sind.

12. Torsionsschwingungsdämpfer nach Anspruch 10 oder 11, **dadurch gekennzeichnet, dass** der jeweilige Tilgermassenträger (16; 16a, 16b) über Bahnkurven (31; 31 a, 31 b) verfügt, in welcher Stufenrollen (32) für die Relativbewegung der Tilgermassen (17) gegenüber dem Tilgermassenträger (16; 16a, 16b) vorgesehen sind.

13. Torsionsschwingungsdämpfer nach Anspruch 11, **dadurch gekennzeichnet, dass** die Tilgermassenträger (16; 16a, 16b) jeweils durch Abstandsstücke (50) in vorbestimmtem Abstand zum Kupplungselement (6) gehalten sind, wobei die Abstandsstücke (50) in Achsrichtung gestuft sind, und in denjenigen Axialbereichen, in welchen sie Aussparungen (51; 51 a, 51 b) des jeweiligen Tilgermassenträgers (16; 16a, 16b) durchgreifen, mit Durchmessern ausgebildet sind, die sich von den Durchmessern der Abstandsstücke (50) axial beidseits der jeweiligen Aussparungen (51; 51 a, 51 b) unterscheiden.

14. Torsionsschwingungsdämpfer nach Anspruch 10 und 13, **dadurch gekennzeichnet, dass** bei Ausbildung der Verbindungsvorrichtung (15) mit einer Mehrzahl an Tilgermassenträgern (16a, 16b) dieselben jeweils mit Axialabstand zueinander angeordnet und durch die Abstandsstücke (50) in einem vorbestimmten Axialabstand zueinander gehalten sind.

15. Torsionsschwingungsdämpfer nach Anspruch 1, **dadurch gekennzeichnet, dass** zwischen Eingang (11, 13) und Ausgang (12, 14) zumindest einer der Dämpfungseinrichtungen (7, 8) eine Drehwinkelbegrenzung (35, 36) vorgesehen ist, bei welcher am Eingang (11, 13) oder an einem mit demselben drehfesten Bauteil (6) eine Profilierung (37, 38) vorgesehen ist, die mit einer am Ausgang (12, 14) vorgesehenen Gegen-Profilierung (39, 40) mit Spiel in Umfangsrichtung zusammen wirkt, um dem Ausgang (12, 14) eine begrenzte Relativdrehbewegung in Umfangsrichtung gegenüber dem Eingang (11, 13) zu gewähren.

16. Torsionsschwingungsdämpfer nach Anspruch 13, **dadurch gekennzeichnet, dass** die Abstandsstücke (50) an dem Kupplungselement (6) des Kupplungssystems (5) befestigt sind, und dass die Aussparungen (51; 51a, 51b) in den Tilgermassenträgern (16; 16a, 16b) ausgebildet sind, die in Umfangsrichtung in Relation zum Verformungsweg der Energiespeicher (23) dimensioniert sind, und zwar derart, dass die Abstandsstücke (50) entweder zur Bildung einer Drehwinkelbegrenzung (35) beitragen, indem sie die in Auslenkrichtung folgenden umfangsseitigen Enden (52a, 52b) der Aussparungen (51; 51a, 51b) vor einem vollständigen Stauchungszustand der Energiespeicher (23) dieser Dämpfungseinrichtung (7) erreichen, oder dass die Abstandsstücke (50) lediglich eine Führungsfunktion für die Tilgermassenträger (16; 16a, 16b) ausüben, indem sie die in Auslenkrichtung folgenden umfangsseitigen Enden (52a, 52b) der Aussparungen (51; 51a, 51b) selbst bei maximaler Stauchung der Energiespeicher (23) dieser Dämpfungseinrichtung (7) nicht erreichen.

17. Torsionsschwingungsdämpfer nach Anspruch 15, **dadurch gekennzeichnet, dass** zur Bildung der Drehwinkelbegrenzung (36) bei der radial äußeren Dämpfungseinrichtung (8) zumindest eine Verzahnung (41) am Eingang (13) vorgesehen ist, und eine entsprechende Gegen-Verzahnung (42) am Ausgang (14).

18. Torsionsschwingungsdämpfer nach Anspruch 1, **dadurch gekennzeichnet, dass** die Energiespeicher (23, 24) zumindest einer der Dämpfungseinrichtungen (7, 8) auf das maximale Lastmoment des Antriebs (2) ausgelegt ist.

19. Torsionsschwingungsdämpfer nach Anspruch 1 mit einem der Kopplungsvorrichtung (4) zugeordneten, antriebsseitig über einen Gehäusedeckel (54) verfügenden Gehäuse (45), **dadurch gekennzeichnet, dass** das Kupplungselement (6) in von dem Gehäusedeckel (54) fortweisender Richtung mittels einer Axiallagerung (44) über die Zusatzmasse (10) axial abstützbar ist.

20. Torsionsschwingungsdämpfer nach Anspruch 2 und 19 mit einem hydrodynamischen Kreis (18), der über ein zwischen Pumpenrad (19) und Turbinenrad (20) angeordnetes Leitrad (21) verfügt, **dadurch gekennzeichnet, dass** die durch das Turbinenrad (20) gebildete Zusatzmasse (10) in vom Gehäusedeckel (54) fortweisender Richtung über die Zusatzmasse (10) an dem Leitrad (21) axial abstützbar ist.

21. Torsionsschwingungsdämpfer nach Anspruch 1, **dadurch gekennzeichnet, dass** dem Kupplungselement (6) ein Reibbelagträger (46) zugeordnet ist, der an seiner dem Gehäusedeckel (54) zugewandten Seite eine Reibfläche (47) aufweist, und in Einrückposition des Kupplungselementes (6) über diese Reibfläche (47) mit einer GegenReibfläche (48) des Gehäusedeckels (54) in Wirkverbindung bringbar ist.

22. Torsionsschwingungsdämpfer nach Anspruch 1, **dadurch gekennzeichnet, dass** zumindest eine der Dämpfungseinrichtungen (7, 8), vorzugsweise die radial innere Dämpfungseinrichtung (7), über zwei mit Versatz zueinander angeordnete Dämpfungseinheiten (7a, 7b) verfügt.

23. Torsionsschwingungsdämpfer nach Anspruch 22, **dadurch gekennzeichnet, dass** die beiden Dämpfungseinheiten (7a, 7b) in Parallelschaltung oder in Reihenschaltung zueinander angeordnet sind.

24. Torsionsschwingungsdämpfer nach Anspruch 22 oder 23, **dadurch gekennzeichnet, dass** die beiden Dämpfungseinheiten (7a, 7b) mit Radialversatz zueinander angeordnet sind.

25. Torsionsschwingungsdämpfer nach Anspruch 1, **dadurch gekennzeichnet, dass** zumindest eine der Dämpfungseinrichtungen (7, 8), vorzugsweise die radial innere Dämpfungseinrichtung (7), über zumindest zwei Energiespeicher (23a, 23b) verfügt, zwischen denen zumindest ein Momentenübertragungselement (85a, 85b) einer Momentenübertragungseinheit (97) wirksam ist, wobei dieses zumindest eine Momentenübertragungselement (85a, 85b) sowohl gegenüber dem Eingang (11) dieser Dämpfungseinrichtung (7) als auch gegenüber dem Ausgang (12) dieser Dämpfungseinrichtung (7) zu einer Relativdrehbewegung befähigt ist.

26. Torsionsschwingungsdämpfer nach Anspruch 1, **dadurch gekennzeichnet, dass** der zumindest eine Tilgermassenträger (16; 16a, 16b) an dem Kupplungselement (6) oder an der der Zusatzmasse (10) zugeordneten Abtriebsnabe (67) zentriert ist.

## Claims

1. Torsional vibration damper (1) for a coupling apparatus (4) which serves to establish an operative connection between a drive (2) and an output (3) and has a clutch system (5) with a clutch element (6) which can be moved between an engaged position, in which an operative connection can be established between the drive (2) and the output (3), and a disengaged position, in which the said operative connection is cancelled, and at least two damping devices (7, 8) which are arranged with a radial offset with respect to one another and which are assigned at least one absorber system (9) which is active between the two damping devices (7, 8) and at least one additional mass (10) which is independent of the absorber system (9), the clutch element (6) being operatively connected to an input (11) of one of the damping devices (7, 8), and an output (14) of another of the damping devices (7, 8) being operatively connected to the output (3), and the output (12) of one of the damping devices (7, 8) being operatively connected to an input (13) of another of the damping devices (7, 8) by means of a connecting apparatus (15) which has at least one absorber mass carrier (16; 16a, 16b) for receiving at least one absorber mass (17) of the absorber system (9), **characterized in that** the clutch element (6) is operatively connected to the input (11) of the radially inner damping device (7), and the output (14) of the radially outer damping device (8) is operatively connected via the additional mass (10) to the output (3), whereas the output (12) of the radially inner damping device (7) is operatively connected via the connecting apparatus (15) to the input (13) of the radially outer damping device (8), with the result that the additional mass (10) and the connecting apparatus (15) are provided such that they can be moved relative to one another.

2. Torsional vibration damper according to Claim 1 having a coupling apparatus (4) which, in addition to the clutch system (5) and the damping devices (7, 8), has a hydrodynamic circuit (18) which has at least a pump impeller (19) and a turbine wheel (20), **characterized in that** the turbine wheel (20) is active as the additional mass (10) which is assigned to the damping devices (7, 8), and is operatively connected via an output hub (67) to the output (3).

3. Torsional vibration damper according to Claim 1 having damping devices (7, 8) which in each case have energy stores (23, 24), **characterized in that** at least one damping device (7; 8) has a centrifugal force support (25; 29) for the energy stores (23; 24).

4. Torsional vibration damper according to Claim 3, **characterized in that** at least the centrifugal force support (29) of one damping device (8) is provided with an energy store channel (26; 87), by way of which the energy stores (24) are supported at least substantially radially to the outside.

5. Torsional vibration damper according to Claim 4, **characterized in that** the energy store channel (26; 87) is either received on the connecting apparatus (15) which is active between the two damping devices (7, 8) or is assigned to the additional mass (10).

6. Torsional vibration damper according to Claim 5, **characterized in that** the connecting apparatus (15) has at least one carrier element (60; 68; 60b), on which the energy store channel (26) is provided.

7. Torsional vibration damper according to Claim 5, **characterized in that** that output (14) of the radially outer damping device (8) which is connected to the additional mass (10) has the energy store channel (87).

8. Torsional vibration damper according to Claim 3, in which the input (11) of at least one damping device (7) has at least one energy store carrier (27) which has recesses (28) for the energy stores (23), **characterized in that** the at least one energy store carrier (27) is assigned a centrifugal force support (25) for energy stores (23) of the damping device (7).

9. Torsional vibration damper according to Claim 8, **characterized in that** the energy store carrier (27) which has a centrifugal force support (25) is provided with a bend (82; 82a, 82b) which forms the centrifugal force support (25) and by way of which the energy store carrier (27) supports the energy stores (23) of the radially inner damping device (7) at least substantially radially on the outside.

10. Torsional vibration damper according to Claim 1, **characterized in that** at least one carrier element (60; 60a, 60b) of the connecting apparatus (15) is configured as an absorber mass carrier (16; 16a, 16b).

11. Torsional vibration damper according to Claim 10, **characterized in that**, if the connecting apparatus (15) is configured with a single absorber mass carrier (16), the absorber masses (17a, 17b) are received on both sides of the absorber mass carrier (16), whereas, if the connecting apparatus (15) is configured with a plurality of absorber mass carriers (16a, 16b), the absorber masses (17a, 17b) are received in an axial region which is provided between two absorber mass carriers (16a, 16b).

12. Torsional vibration damper according to Claim 10 or 11, **characterized in that** the respective absorber mass carrier (16; 16a, 16b) has track cams (31; 31a, 31b), in which stepped rollers (32) are provided for the relative movement of the absorber masses (17) with respect to the absorber mass carrier (16; 16a, 16b).

13. Torsional vibration damper according to Claim 11, **characterized in that** the absorber mass carriers (16; 16a, 16b) are held at a predefined spacing from the clutch element (6) in each case by way of spacer pieces (50), the spacer pieces (50) being stepped in the axial direction and, in those axial regions in which they engage through cut-outs (51; 51a, 51b) of the respective absorber mass carrier (16; 16a, 16b), being configured with diameters which differ from the diameters of the spacer pieces (50) axially on both sides of the respective cut-outs (51; 51a, 51b).

14. Torsional vibration damper according to Claims 10 and 13, **characterized in that**, if the connecting apparatus (15) is configured with a plurality of absorber mass carriers (16a, 16b), the said absorber mass carriers (16a, 16b) are arranged in each case at an axial spacing from one another and are held at a predefined axial spacing from one another by way of the spacer pieces (50).

15. Torsional vibration damper according to Claim 1, **characterized in that** a rotary angle limiting means (35, 36) is provided between the input (11, 13) and the output (12, 14) of at least one of the damping devices (7, 8), in the case of which rotary angle limiting means (35, 36) a profiling (37, 38) is provided on the input (11, 13) or on a component (6) which is fixed to the latter so as to rotate with it, which profiling (37, 38) interacts, with play in the circumferential direction, with a counter-profiling (39, 40) which is provided on the output (12, 14), in order to permit the output (12, 14) a limited relative rotational movement in the circumferential direction with respect to the input (11, 13).

16. Torsional vibration damper according to Claim 13, **characterized in that** the spacer pieces (50) are fastened to the clutch element (6) of the clutch system (5), and **in that** the cut-outs (51; 51a, 51b) are configured in the absorber mass carriers (16; 16a, 16b) which are dimensioned in the circumferential direction in relation to the deformation travel of the energy stores (23), to be precise in such a way that the spacer pieces (50) either contribute to the formation of a rotary angle limiting means (35) by reaching the circumferential-side ends (52a, 52b) of the cut-outs (51; 51a, 51b) which follow in the deflection direction before a complete compression state of the energy stores (23) of the said damping device (7), or in such a way that the spacer pieces (50) perform merely a guide function for the absorber mass carriers (16; 16a, 16b) by not reaching the circumferential-side ends (52a, 52b) of the cut-outs (51; 51a, 51b) which follow in the deflection direction even in the case of maximum compression of the energy stores (23) of the said damping device (7).

17. Torsional vibration damper according to Claim 15, **characterized in that**, in order to form the rotary angle limiting means (36) in the case of the radially outer damping device (8), at least one spline system (41) is provided on the input (13) and a corresponding counter-spline system (42) is provided on the output (14).

18. Torsional vibration damper according to Claim 1, **characterized in that** the energy stores (23, 24) of at least one of the damping devices (7, 8) are designed for the maximum load torque of the drive (2).

19. Torsional vibration damper according to Claim 1 having a housing (45) which is assigned to the coupling apparatus (4) and has a housing cover (54) on the drive side, **characterized in that** the clutch element (6) can be supported axially via the additional mass (10) by means of an axial bearing (44) in the direction which points away from the housing cover (54).

20. Torsional vibration damper according to Claims 2 and 19 having a hydrodynamic circuit (18) which has a diffuser (21) which is arranged between the pump impeller (19) and the turbine wheel (20), **characterized in that** the additional mass (10) which is formed by the turbine wheel (20) can be supported axially via the additional mass (10) on the diffuser (21) in the direction which points away from the housing cover (54).

21. Torsional vibration damper according to Claim 1, **characterized in that** the clutch element (6) is assigned a friction lining carrier (46) which has a friction face (47) on its side which faces the housing cover (54), and can be brought into operative contact via the said friction face (47) with a counter-friction face (48) of the housing cover (54) in the engaged position of the clutch element (6).

22. Torsional vibration damper according to Claim 1, **characterized in that** at least one of the damping devices (7, 8), preferably the radially inner damping device (7), has two damping units (7a, 7b) which are arranged at an offset with respect to one another.

23. Torsional vibration damper according to Claim 22, **characterized in that** the two damping units (7a, 7b) are arranged in a parallel connection or in a series connection with respect to one another.

24. Torsional vibration damper according to Claim 22 or 23, **characterized in that** the two damping units (7a, 7b) are arranged at a radial offset with respect to one another.

25. Torsional vibration damper according to Claim 1, **characterized in that** at least one of the damping devices (7, 8), preferably the radially inner damping device (7), has at least two energy stores (23a, 23b), between which at least one torque transmission element (85a, 85b) of a torque transmission unit (97) is active, the said at least one torque transmission element (85a, 85b) being capable of a relative rotational movement both with respect to the input (11) of the said damping device (7) and with respect to the output (12) of the said damping device (7).

26. Torsional vibration damper according to Claim 1, **characterized in that** the at least one absorber mass carrier (16; 16a, 16b) is centred on the clutch element (6) or on the output hub (67) which is assigned to the additional mass (10).

## Revendications

1. Amortisseur de vibrations torsionnelles (1) pour un dispositif d'accouplement (4) servant à établir une liaison fonctionnelle entre un entraînement (2) et une prise de force (3) qui dispose d'un système d'embrayage (5) avec un élément d'embrayage (6) pouvant être déplacé entre une position embrayée dans laquelle une liaison fonctionnelle peut être établie entre l'entraînement (2) et la prise de force (3) et une position débrayée dans laquelle cette liaison fonctionnelle est supprimée, et disposant également d'au moins deux dispositifs d'amortissement (7, 8) disposés de manière décalée radialement l'un par rapport à l'autre, auxquels sont associés au moins un système d'amortisseur (9) agissant entre les deux dispositifs d'amortissement (7, 8) et au moins une masse supplémentaire (10) indépendante du système d'amortisseur (9), l'élément d'embrayage (6) étant en liaison fonctionnelle avec une entrée (11) de l'un des dispositifs d'amortissement (7, 8) et une sortie (14) d'un autre dispositif d'amortissement (7, 8) étant en liaison fonctionnelle avec la prise de force (3), et la sortie (12) de l'un des dispositifs d'amortissement (7, 8) étant en liaison fonctionnelle avec une entrée (13) d'un autre des dispositifs d'amortissement (7, 8) au moyen d'un dispositif de liaison (15) qui présente au moins un support de masse d'amortissement (16 ; 16a, 16b) pour recevoir au moins une masse d'amortissement (17) du système d'amortisseur (9), **caractérisé en ce que** l'élément d'embrayage (6) est en liaison fonctionnelle avec l'entrée (11) du dispositif d'amortissement radialement interne (7) et la sortie (14) du dispositif d'amortissement radialement externe (8) est en liaison fonctionnelle avec la prise de force (3) par le biais de la masse supplémentaire (10), tandis que la sortie (12) du dispositif d'amortissement radialement interne (7) est en liaison fonctionnelle par le biais du dispositif de liaison (15) avec l'entrée (13) du dispositif d'amortissement radialement externe (8), de telle sorte que la masse supplémentaire (10) et le dispositif de liaison (15) soient prévus de manière à pouvoir être déplacés l'un par rapport à l'autre.

2. Amortisseur de vibrations torsionnelles selon la revendication 1, comprenant un dispositif d'accouplement (4) qui présente, en plus du système d'embrayage (5) et des dispositifs d'amortissement (7, 8), un circuit hydrodynamique (18) qui dispose d'au moins une roue de pompe (19) et d'une roue de turbine (20), **caractérisé en ce que** la roue de turbine (20) agit en tant que masse supplémentaire (10) associée aux dispositifs d'amortissement (7, 8) et est en liaison fonctionnelle par le biais d'un moyeu de prise de force (67) avec la prise de force (3).

3. Amortisseur de vibrations torsionnelles selon la revendication 1, comprenant des dispositifs d'amortissement (7, 8) qui disposent à chaque fois d'accumulateurs d'énergie (23, 24), **caractérisé en ce qu'**au moins un dispositif d'amortissement (7 ; 8) dispose d'un support de force centrifuge (25 ; 29) pour l'accumulateur d'énergie (23 ; 24).

4. Amortisseur de vibrations torsionnelles selon la revendication 3, **caractérisé en ce qu'**au moins le support de force centrifuge (29) d'un dispositif d'amortissement (8) est pourvu d'un canal accumulateur d'énergie (26 ; 87) par le biais duquel les accumulateurs d'énergie (24) sont supportés au moins essentiellement radialement vers l'extérieur.

5. Amortisseur de vibrations torsionnelles selon la revendication 4, **caractérisé en ce que** le canal accumulateur d'énergie (26 ; 87) est soit reçu au niveau du dispositif de liaison (15) agissant entre les deux dispositifs d'amortissement (7, 8), soit est associé à la masse supplémentaire (10).

6. Amortisseur de vibrations torsionnelles selon la revendication 5, **caractérisé en ce que** le dispositif de liaison (15) dispose d'au moins un élément de support (60 ; 60a ; 60b) au niveau duquel est prévu le canal accumulateur d'énergie (26).

7. Amortisseur de vibrations torsionnelles selon la revendication 5, **caractérisé en ce que** la sortie (14) du dispositif d'amortissement radialement externe (8) connectée à la masse supplémentaire (10) présente le canal accumulateur d'énergie (87).

8. Amortisseur de vibrations torsionnelles selon la revendication 3, dans lequel l'entrée (11) d'au moins un dispositif d'amortissement (7) dispose d'au moins un support d'accumulateur d'énergie (27) qui présente des évidements (28) pour les accumulateurs d'énergie (23), **caractérisé en ce qu'**un support de force centrifuge (25) pour les accumulateurs d'énergie (23) du dispositif d'amortissement (7) est associé à l'au moins un support d'accumulateur d'énergie (27).

9. Amortisseur de vibrations torsionnelles selon la revendication 8, **caractérisé en ce que** le support d'accumulateur d'énergie (27) disposant d'un support de force centrifuge (25) est pourvu d'une partie recourbée (82 ; 82a, 82b) formant le support de force centrifuge (25), avec laquelle le support d'accumulateur d'énergie (27) supporte les accumulateurs d'énergie (23) du dispositif d'amortissement radialement interne (7) au moins essentiellement radialement vers l'extérieur.

10. Amortisseur de vibrations torsionnelles selon la revendication 1, **caractérisé en ce qu'**au moins un élément de support (60 ; 60a, 60b) du dispositif de liaison (15) est réalisé sous forme de support de masse d'amortissement (16 ; 16a, 16b).

11. Amortisseur de vibrations tortionnaires selon la revendication 10, **caractérisé en ce que** lors de la réalisation du dispositif de liaison (15) avec un support de masse d'amortissement unique (16), les masses d'amortissement (17a, 17b) sont reçues des deux côtés du support de masse d'amortissement (16), tandis que lors de la réalisation du dispositif de liaison (15) avec une pluralité de supports de masse d'amortissement (16a, 16b), les masses d'amortissement (17a, 17b) sont reçues dans une région axiale prévue entre deux supports de masse d'amortissement (16a, 16b).

12. Amortisseur de vibrations torsionnelles selon la revendication 10 ou 11, **caractérisé en ce que** le support de masse d'amortissement respectif (16 ; 16a, 16b) dispose de trajectoires courbes (31 ; 31a, 31b) dans lesquelles sont prévues des poulies à gorges (32) pour le mouvement relatif des masses d'amortissement (17) par rapport au support de masse d'amortissement (16 ; 16a, 16b).

13. Amortisseur de vibrations torsionnelles selon la revendication 11, **caractérisé en ce que** les supports de masse d'amortissement (16 ; 16a, 16b) sont à chaque fois retenus par des pièces d'espacement (50) à une distance prédéterminée de l'élément d'embrayage (6), les pièces d'espacement (50) étant étagées dans la direction axiale et étant réalisées, dans les régions axiales dans lesquelles elles viennent en prise à travers des évidements (51 ; 51a, 51b) du support de masse d'amortissement respectif (16 ; 16a, 16b), avec des diamètres qui sont différents des diamètres des pièces d'espacement (50) axialement des deux côtés des évidements respectifs (51 ; 51a, 51b).

**14.** Amortisseur de vibrations torsionnelles selon les revendications 10 et 13, **caractérisé en ce que** lors de la réalisation du dispositif de liaison (15) avec une pluralité de supports de masse d'amortissement (16a, 16b), ceux-ci sont à chaque fois disposés à une distance axiale les uns des autres et sont retenus par les pièces d'espacement (50) à une distance axiale prédéterminée les uns des autres.

**15.** Amortisseur de vibrations torsionnelles selon la revendication 1, **caractérisé en ce qu'**entre l'entrée (11, 13) et la sortie (12, 14) d'au moins l'un des dispositifs d'amortissement (7, 8) est prévue une limitation d'angle de rotation (35, 36), au niveau de laquelle, à l'entrée (11, 13) ou au niveau d'un composant (6) solidaire en rotation de celle-ci, est prévu un profilage (37, 38) qui coopère avec jeu dans la direction périphérique avec un profilage conjugué (39, 40) prévu au niveau de la sortie (12, 14), afin de de fournir à la sortie (12, 14) un mouvement de rotation relatif limité dans la direction périphérique par rapport à l'entrée (11, 13).

**16.** Amortisseur de vibrations torsionnelles selon la revendication 13, **caractérisé en ce que** les pièces d'espacement (50) sont fixées au niveau de l'élément d'embrayage (6) du système d'embrayage (5), et **en ce que** les évidements (51 ; 51a, 51b) sont réalisés dans les supports de masse d'amortissement (16 ; 16a, 16b), qui sont dimensionnés, dans la direction périphérique par rapport à la course de déformation des accumulateurs d'énergie (23), et ce de telle sorte que les pièces d'espacement (50) contribuent soit à la formation d'une limitation d'angle de rotation (35), en atteignant les extrémités du côté de la périphérie (52a, 52b) des évidements (51 ; 51a, 51b) se suivant dans la direction de déviation avant un état d'écrasement complet des accumulateurs d'énergie (23) de ce dispositif d'amortissement (7), soit de telle sorte que les pièces d'espacement (50) exercent seulement une fonction de guidage pour les supports de masse d'amortissement (16 ; 16a, 16b) en n'atteignant pas les extrémités du côté de la périphérie (52a, 52b) des évidements (51 ; 51a, 51b) se suivant dans la direction de déviation même en cas d'écrasement maximal des accumulateurs d'énergie (23) de ce dispositif d'amortissement (7).

**17.** Amortisseur de vibrations torsionnelles selon la revendication 15, **caractérisé en ce que** pour former la limitation d'angle de rotation (36) dans le cas du dispositif d'amortissement radialement externe (8), au moins une denture (41) est prévue à l'entrée (13), et une denture conjuguée correspondante (42) est prévue à la sortie (14).

**18.** Amortisseur de vibrations torsionnelles selon la revendication 1, **caractérisé en ce que** les accumulateurs d'énergie (23, 24) d'au moins l'un des dispositifs d'amortissement (7, 8) sont conçus pour le couple de charge maximal de l'entraînement (2).

**19.** Amortisseur de vibrations torsionnelles selon la revendication 1, comprenant un boîtier (45) associé au dispositif d'accouplement (4), disposant, du côté de l'entraînement, d'un couvercle de boîtier (54), **caractérisé en ce que** l'élément d'embrayage (6) peut être supporté axialement dans la direction s'éloignant du couvercle de boîtier (54) au moyen d'un support sur palier axial (44) par le biais de la masse supplémentaire (10).

**20.** Amortisseur de vibrations torsionnelles selon les revendications 2 et 19, comprenant un circuit hydrodynamique (18) qui dispose d'une roue directrice (21) disposée entre la roue de pompe (19) et la roue de turbine (20), **caractérisé en ce que** la masse supplémentaire (10) formée par la roue de turbine (20) peut être supportée axialement dans la direction s'éloignant du couvercle de boîtier (54) par le biais de la masse supplémentaire (10) sur la roue directrice (21).

**21.** Amortisseur de vibrations torsionnelles selon la revendication 1, **caractérisé en ce qu'**un support de garniture de friction (46) est associé à l'élément d'embrayage (6), lequel présente, au niveau de son côté tourné vers le couvercle de boîtier (54), une surface de friction (47) et peut être amené en liaison fonctionnelle avec une surface de friction conjuguée (48) du couvercle de boîtier (54) par le biais de cette surface de friction (47) dans la position d'embrayage de l'élément d'embrayage (6).

**22.** Amortisseur de vibrations torsionnelles selon la revendication 1, **caractérisé en ce qu'**au moins l'un des dispositifs d'amortissement (7, 8), de préférence le dispositif d'amortissement radialement interne (7), dispose de deux unités d'amortissement (7a, 7b) disposées de manière décalée l'une par rapport à l'autre.

**23.** Amortisseur de vibrations torsionnelles selon la revendication 22, **caractérisé en ce que** les deux unités d'amortissement (7a, 7b) sont disposées l'une par rapport à l'autre dans un montage en parallèle ou dans un montage en série.

**24.** Amortisseur de vibrations torsionnelles selon la revendication 22 ou 23, **caractérisé en ce que** les deux unités d'amortissement (7a, 7b) sont disposées de manière décalée radialement l'une par rapport à l'autre.

25. Amortisseur de vibrations torsionnelles selon la revendication 1, **caractérisé en ce qu'**au moins l'un des dispositifs d'amortissement (7, 8), de préférence le dispositif d'amortissement radialement interne (7), dispose d'au moins deux accumulateurs d'énergie (23a, 23b), entre lesquels agit au moins un élément de transfert de couple (85a, 85b) d'une unité de transfert de couple (97), cet au moins un élément de transfert de couple (85a, 85b) pouvant être animé d'un mouvement de rotation relatif à la fois par rapport à l'entrée (11) de ce dispositif d'amortissement (7) et par rapport à la sortie (12) de ce dispositif d'amortissement (7).

26. Amortisseur de vibrations torsionnelles selon la revendication 1, **caractérisé en ce que** l'au moins un support de masse d'amortissement (16 ; 16a, 16b) est centré au niveau de l'élément d'embrayage (6) ou au niveau du moyeu de prise de force (67) associé à la masse supplémentaire (10).

# Fig. 1

# Fig. 2

A - A

Fig. 3

Fig. 4

Fig. 5

Fig. 6

Fig. 7

Fig. 8

Fig. 9

Fig. 10

Fig. 11

Fig. 12

Fig. 13

D - D

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011110146 A1
- WO 2011076168 A1